# EUROPEAN PATENT APPLICATION

(11) **EP 1 626 354 A2**
(43) Date of publication of application: **15.02.2006**
(21) Application number: 05017492.9
(22) Date of filing: 11.08.2005
(51) Int. Cl.: G06F 17/30

(54) **Method and apparatus for processing data acquired via internet**

(30) Priority: 11.08.2004 JP 2004234682
(71) Applicant: Saora Kabushiki Kaisha, Yokohama-Shi 225-0014 (JP)
(72) Inventor: Rohra Suda, Aruna, Tsurumi ku, Yokohama-shi, 230-0077 (JP); Garg, Shweta, Tsurumi ku, Yokohama-shi, 230-0077 (JP); Balani, Neeraj, Tsurumi ku, Yokohama-shi, 230-0077 (JP); Prem Anand, Joseph, Tsurumi ku, Yokohama-shi, 230-0077 (JP)
(74) Representative: Vossius & Partner

(57) **Abstract**

A system saves browsed data in a database in response to a user request by assigning a predetermined index to the data, wherein the user is not requested for any index. The system sorts indices of the data in the database and displays the sorted indices, then the system retrieves, in response to a selection of an index from the displayed indices by a user, the data corresponding to the selected index from the database. Accordingly if a user wants to save a data currently browsed, he can have the data stored in the database easily only by issuing an instruction to save without specifying any index.

## Description

The present invention relates to a method and apparatus for processing data, and more particularly a method and apparatus for processing data browsed by an Internet browser.

A conventional computer can access and display data in an Internet using a software called browser. The conventional computer also can open a file application and store data in a file.

The data on the browser can be transported to a word processing software or the like. Then a user can add an annotation to the browsed data on the word processing software or the like. The conventional computer can also send the browsed data as it is or with adding an annotation to other computer.

In the above conventional computer, however, the user must specify a folder and a file name for saving the browsed data. The user must open respective applications to save, make an annotation, and send the data. Therefore, the user has to perform complex operations to save the browsed data, make an annotation therein, and send the browsed or annotated data to other computer.

According to certain embodiments of the present invention, the present invention provides a method and apparatus to save data, which a user wants to do with a simple operation.

According to one of the embodiments, the present invention relates to a data processing method comprising the steps of acquiring data via an internet, selecting an attribute of data to be processed, extracting data of the selected attribute from an entire or a part of the acquired data, and performing a predetermined process on the extracted data.

According to another embodiment, the present invention relates to a data processing method comprising the steps of displaying a web page acquired via an internet, displaying a menu of processes for data related to a link in the displayed web page in response to clicking a right button of a mouse on the web page, and performing a process selected by a user from the menu on the data related to the link.

According to still another embodiment, the present invention relates to a data processing method comprising the steps of setting an index for data in advance of acquiring the data, displaying an identifier for the setting, acquiring data via an internet, and assigning, in response to selecting the identifier, the index corresponding to the identifier to an entire or a part of the acquired data and performing a predetermined process thereon.

According to a further embodiment, the present invention relates to a data processing method comprising the steps of displaying a menu for selecting a process for data and specifying a URL, and obtaining data from the specified URL and displaying the obtained data.

According to a further embodiment, the present invention relates to a data processing method comprising the steps of inputting a keyword, selecting a search engine for an internet search, and searching data by the selected search engine based on the input keyword.

According to a further embodiment, the present invention relates to a data processing method comprising the steps of searching data, specifying a common attribute for a search result, and storing at least a part of the search result with the specified attribute.

According to a further embodiment, the present invention relates to a data processing method comprising the steps of displaying at least one of a first menu for selecting an identifier name of a process and a second menu for a button image of a process, and switching one of the first and second menu currently displayed with another one.

Other features and advantages of the present invention will be apparent from the following description taken in conjunction with the accompanying drawings, in which like reference characters designate the same or similar parts throughout the figures thereof.

The accompanying drawings, which are incorporated in and constitute a part of the specification, illustrate embodiments of the invention and, together with the description, serve to explain the principles of the invention.
Fig. 1 is a block diagram illustrating an exemplary hardware configuration according to an embodiment of the present invention.
Fig. 2 shows the functional block diagram of an exemplary information processing system embodying the present invention.
Fig. 3 shows an example of the system's small UI interface.
Fig. 4 shows an example of the system's sessions UI interface.
Fig. 5 shows an example of the system's links UI interface along with different sorting options.
Fig. 6 shows an example of the system's links UI interface sorted by KeepAs.
Fig. 7 shows an example of the system's main UI interface.
Fig. 8 is a flowchart of exemplary procedural steps when a function key on the UI is pressed.
Fig. 9 is a flowchart of exemplary procedural steps when the function key is associated to News.
Fig 10 is a flowchart of exemplary procedural steps when the function key is associated to Search Results.
Fig. 11 is a flowchart of exemplary procedural steps when the function key is associated to News On Hold.
Fig. 12 is a flowchart of exemplary procedural steps when the function key is associated to Web Search.
Fig. 13 is a flowchart of exemplary procedural steps when the function key is associated to MyPage.
Fig. 14 is a flowchart of exemplary procedural steps when the function key is associated to k-search.
Fig. 15 is a flowchart of exemplary procedural steps when the function key is associated to MyDocuments.
Fig. 16 shows an exemplary table for Function Key associations.
Fig. 17 is a flowchart of exemplary procedural steps of the system flow for the custom function keys of small UI.
Fig. 18 is a flowchart of exemplary procedural steps of UserSpecifications.
Fig. 19 shows an exemplary table for the Dictionary of Functions.
Fig. 20 shows an exemplary table for the Dictionary of Function Names.
Fig. 21 shows an exemplary table for the Dictionary of KeepAs.
Fig. 22 shows an exemplary table for the Dictionary of Keywords.
Fig. 23 shows an exemplary table for the Dictionary of Icons
Fig. 24 shows exemplary user settings for user defined save function key.
Fig. 25 is a flowchart of exemplary procedural steps of the system flow for displaying the small UI.
Fig. 26 is a flowchart of exemplary procedural steps of Save.
Fig. 27 is a flowchart of exemplary procedural steps of GetHTMLData.
Fig. 28 is a flowchart of exemplary procedural steps of GetTargetHTMLandSetSelectionFlag.
Fig. 29 is a flowchart of exemplary procedural steps of FetchTopHtml.
Fig. 30 is a flowchart of exemplary procedural steps of FetchImagesOnly.
Fig. 31 is a flowchart of exemplary procedural steps of FetchLinks.
Fig. 32 is a flowchart of exemplary procedural steps of ImportCheck.
Fig. 33 is a flowchart of exemplary procedural steps of FetchAllEx2.
Fig. 34 is a flowchart of exemplary procedural steps of FetchAll.
Fig. 35 is a flowchart of exemplary procedural steps of DoTheLayout.
Fig. 36 is a flowchart of exemplary procedural steps of system search from small UI.
Fig. 37 shows an example of Synchronize Properties of search and organization.
Fig. 38 shows an example of user settings for Save function.
Fig. 39 shows an example of user settings for Go to URL function.
Fig. 40 and 41 are flowcharts of exemplary procedural steps for right click Save.
Fig. 42 shows an exemplary result of QuickSave
Fig. 43 shows an exemplary result of Advanced Save with Text Only SaveOption.
Fig. 44 shows an exemplary result of Advanced Save with Images Only SaveOption.
Fig. 45 shows an exemplary result of Advanced Save with Links Only SaveOption.
Fig. 46 shows an example of area selection on HTML page.
Fig. 47 shows an exemplary result of Quick Save for a selected area.
Fig. 48 shows an exemplary result of Advanced Save with Text Only SaveOption for a selected area.
Fig. 49 shows an exemplary result of Advanced Save with Images Only SaveOption for a selected area.
Fig. 50 shows an exemplary result of Advanced Save with Links Only SaveOption for a selected area.
Fig. 51 shows an exemplary result of Quick Save with Page+ option.
Fig. 52 shows an exemplary result of Advanced Save with Page+ Text Only SaveOption.
Fig. 53 shows an exemplary result of Advanced Save with Page+ Images Only SaveOption.
Fig. 54 shows an exemplary result of Advanced Save with Page+ Links Only SaveOption.
Fig. 55 shows an exemplary database table for a saved page.
Fig. 56 is a flowchart of exemplary procedural steps for GetSaveOption.
Fig. 57 is a flowchart description of exemplary associated functions for various buttons on the main UI.
Fig. 58 is a flowchart of exemplary procedural steps for the Main UI Save.
Fig. 59 is a flowchart of exemplary procedural steps for the Automatic Save.
Fig. 60 is a flowchart of exemplary procedural steps for Detailed Save.
Fig. 61 is a flowchart of exemplary procedural steps for Export.
Fig. 62 is a flowchart of exemplary procedural steps for Send.
Fig. 63 is a flowchart of exemplary procedural steps for Save UserFlow.
Fig. 64 is a flowchart of exemplary procedural steps for Save UI.
Fig. 65 is a flowchart of exemplary procedural steps for Advanced Save UI.
Fig. 66 is a flowchart of exemplary procedural steps for Save Page+ UI.
Fig. 67 is a flowchart of exemplary procedural steps for KeepAs view user flow.
Fig. 68 is a flowchart of exemplary procedural steps for getting the KeepAs view when a user clicks on keepoint^{R} from a browser toolbar or menu.
Fig. 69 is a flowchart of exemplary procedural steps for getting the pages under KeepAs view when a user clicks on an action or a KeepAs or <No KeepAs>.
Fig. 70 shows an exemplary result of Advanced Save with Page+ Links Links SaveOption.
Fig. 71 is an example of Advanced save UI without area selection.
Fig. 72 is an example of Advanced save UI with area selection.
Fig. 73 is an example of right click anywhere on the page.
Fig. 74 is an example of right click on links only.
Fig. 75 is an example of right click on the selected area.
Fig. 76 is an example of Top HTML Save with area selection.
Fig. 77 is an example of Quick Save UI of Selected Area with layout.
Fig. 78 is an example of Search and Organize UI.
Fig. 79 is an example of assigning the value of KeepAs as one of the KeeTools.

With reference to the figures, various embodiments of the method, system and apparatus for discovering, establishing and managing network connectivity across disparate networks will now be described in greater detail. It is to be understood that the tasks shown in the figures and described in this description can be sequenced in many different orders to achieve the desired result. The order or sequence of tasks illustrated in the figures is merely intended to be exemplary of the concepts defined herein.

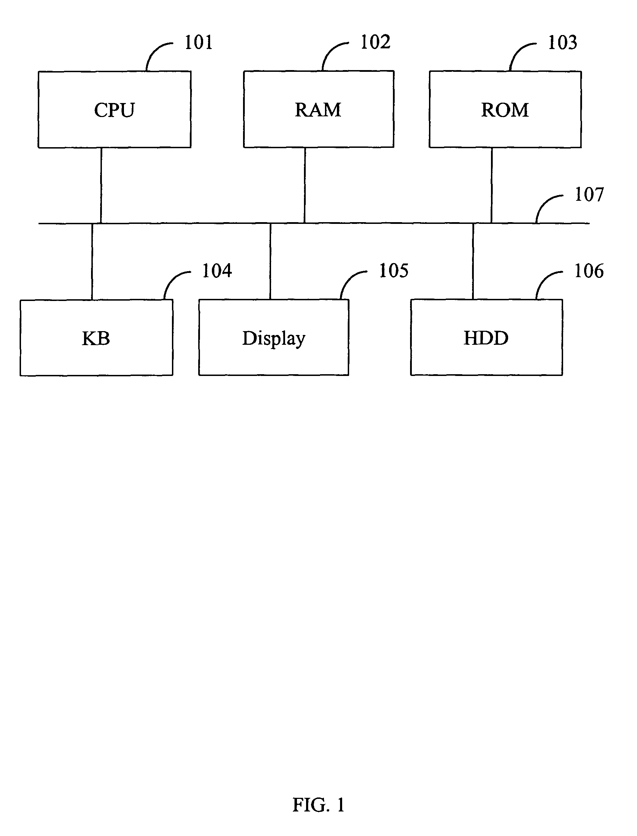

Fig. 1 is a block diagram illustrating the hardware configuration according to an embodiment of the present invention. In this figure, a central processing unit (CPU) 101 is operative to perform operations for various processing and make a logical decision or the like and further controls each composing element connected to a bus 107.

A RAM 102 is used to temporarily store variables and intermediate data generated during the processing. A program from an external source may be loaded into the RAM 102. A ROM 103 is used to store programs, which correspond to individual flowcharts that will be described later and which are to be executed by the CPU 101, and fixed data.

A keyboard (KB) 104 is used for inputting data and an instruction by a user. A mouse or other input devices may be used with the keyboard 104. Display 105 displays data and a hard disk drive (HHD) 106 stores data of a database, a program, and the like.

The bus 107 is used to transfer an address signal indicating a composing element to be controlled by the CPU 101, a control signal used for controlling each composing element and data to be exchanged between the composing equipment.

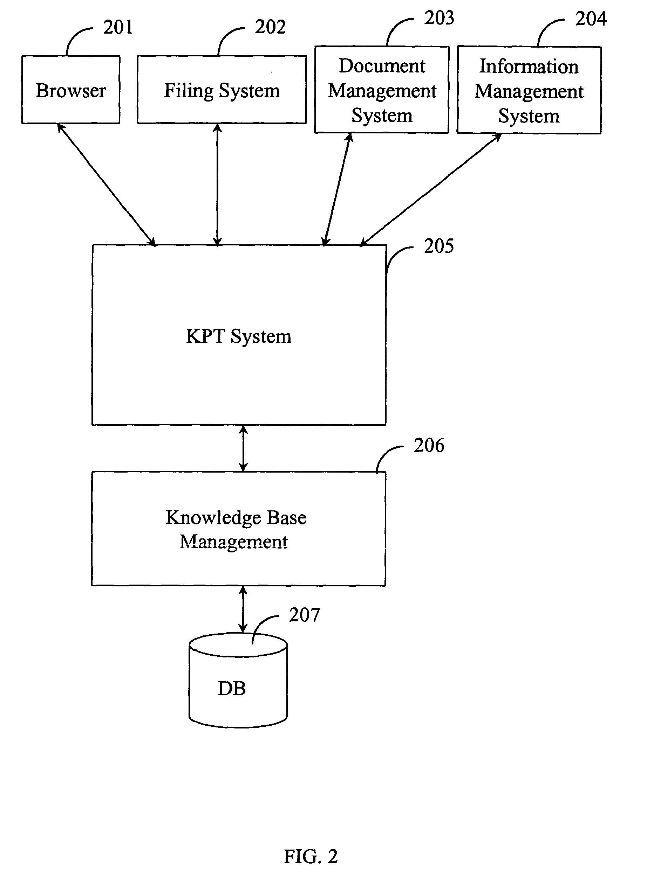

Fig. 2 shows the functional block diagram of information processing system embodying the present invention. Browser 201 is used for information browsing of the Web. Filing system 202 is for filing and managing files. Document Management System 203 is for managing documents. Information Management System 204 is for managing information other than documents. KPT System interacts and acts as a controlling system as explained in detail in this embodiment to Browser 201, Filing System 202, Document Management System 203 and Information Management System 204. Knowledge Base Management 206, is the management of knowledge accessed/stored from/to the Database 206.

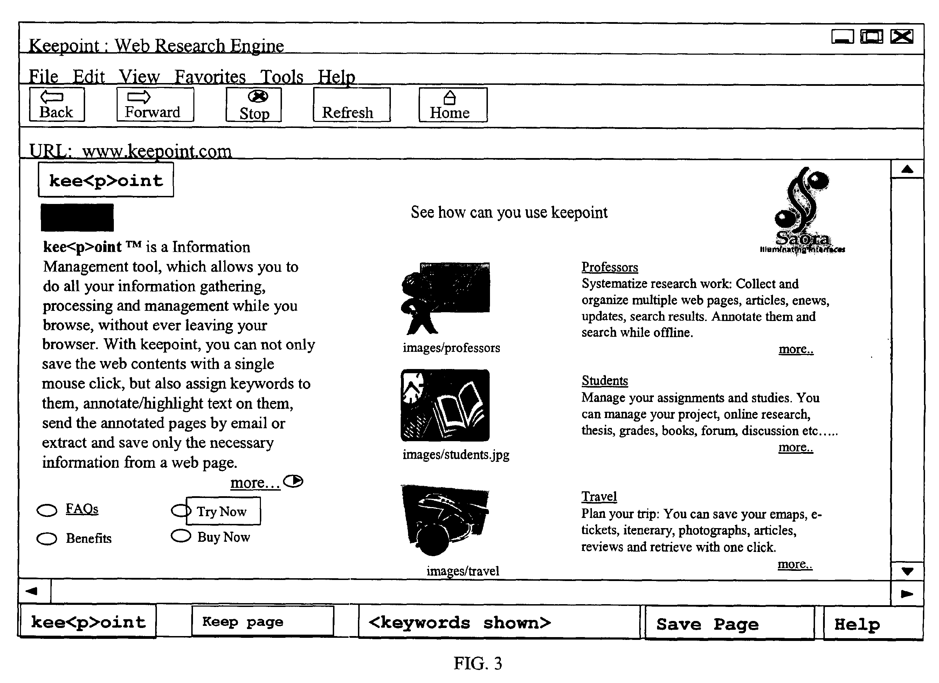

Fig. 3 displays the small UI of system invented on the internet explorer browser window.

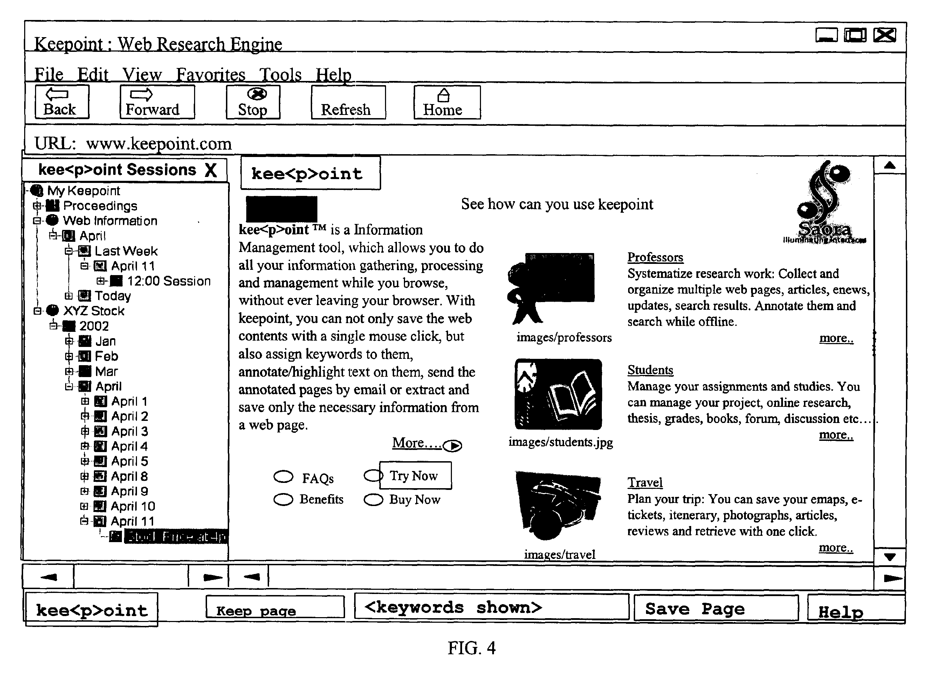

Fig. 4 gives an outlook of the internet explorer browser window giving information pertaining to the system sessions.

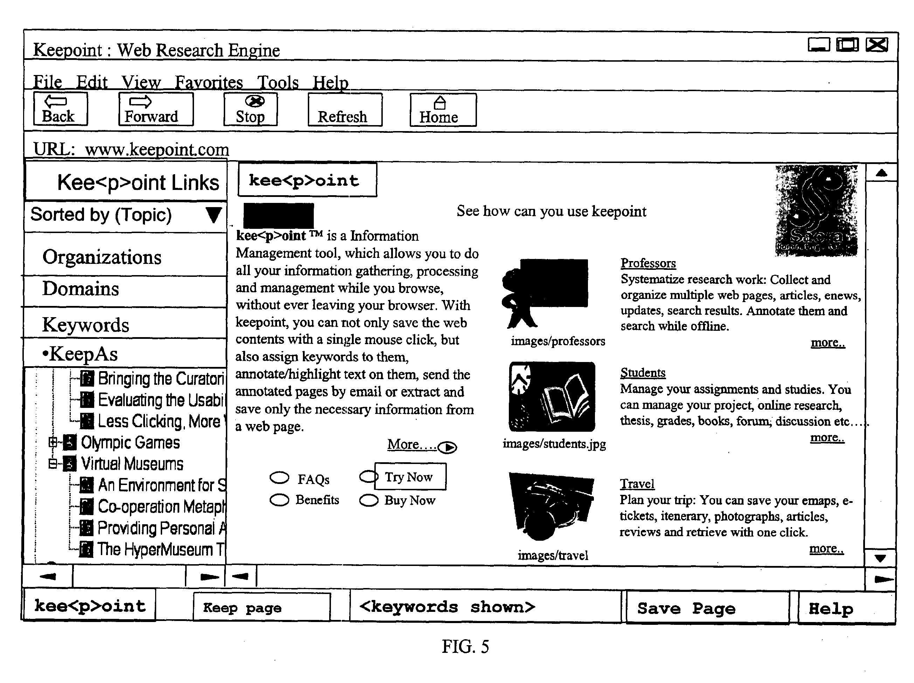

Fig. 5 gives an outlook of the internet explorer browser window giving information pertaining to the system links along with the sorting options such as sorted by KeepAs, sorted by domains, sorted by keywords etc.

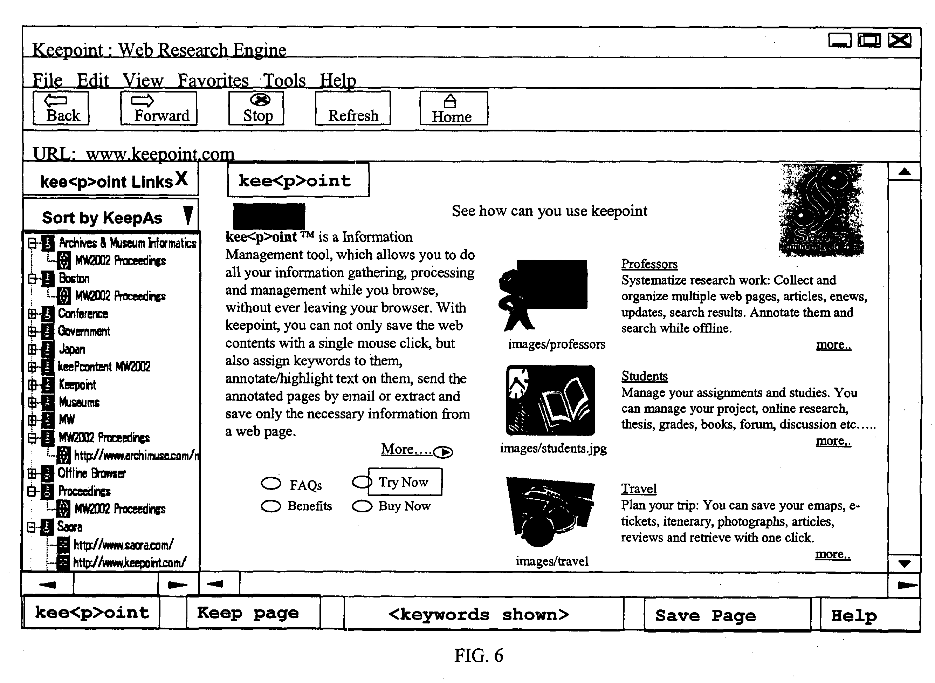

Fig. 6 gives an outlook of the internet explorer browser window giving information pertaining to the system links when it is sorted by KeepAs.

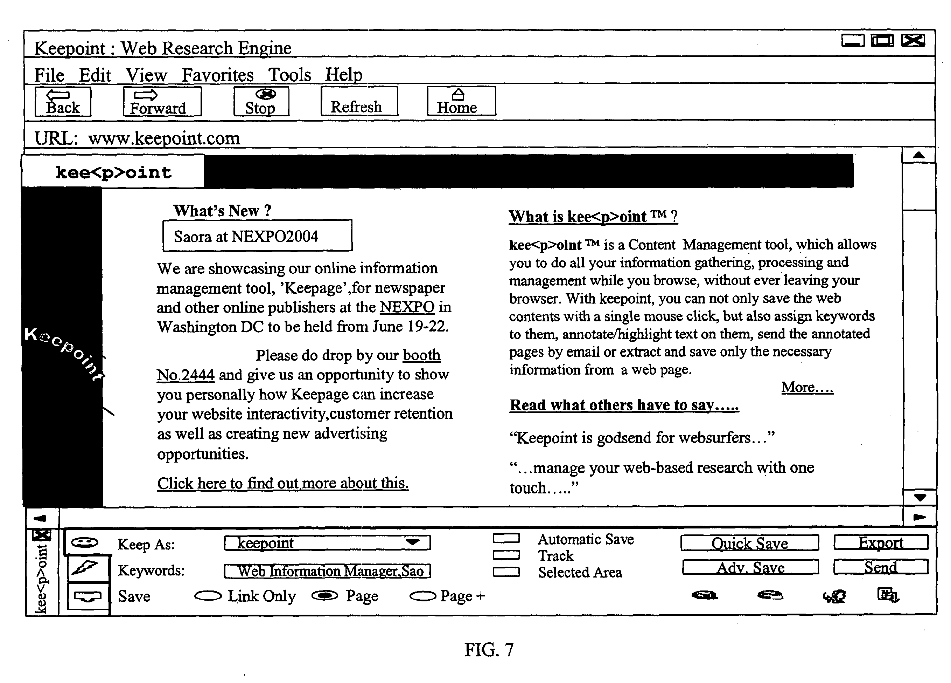

Fig. 7 displays the main UI of system on the internet explorer browser window.

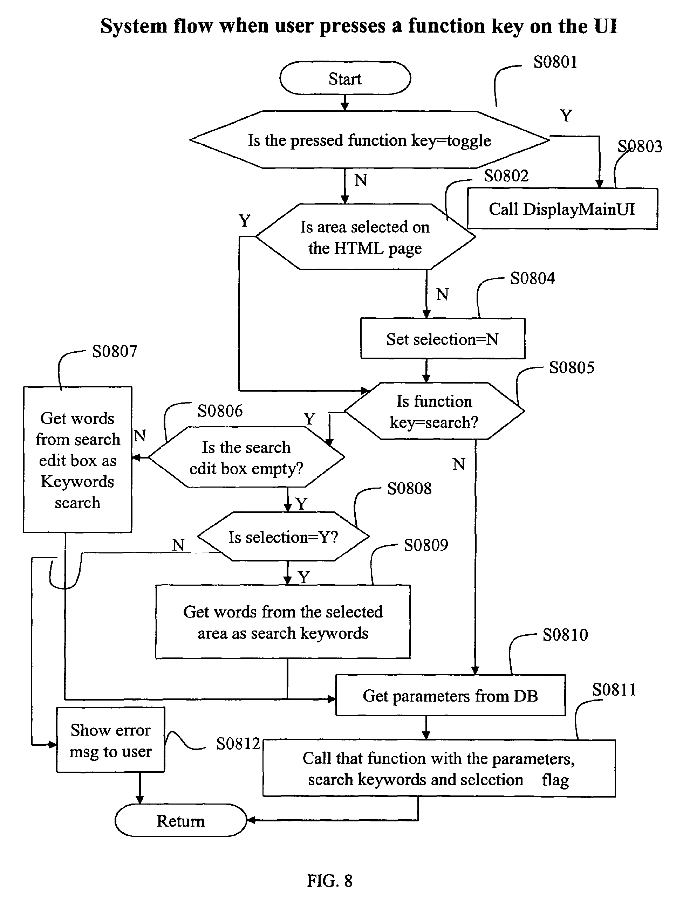

Fig. 8 is a flowchart of an exemplary system flow when the user presses a function key on the UI. In step S0801, a check is made to determine if the pressed function key is Toggle or not. If it is Toggle, then in step S0803, the DisplayMainUI function is called. If not, then in step S0802, a check is made to determine whether an area is selected on the HTML page or not. If an area is not selected, then in step S0804, the selection is set to N. In step S0805, a check is made to determine whether the function key pressed is Search or not.

If Search is pressed, then a check is made in step S0806, to determine if the search edit box is empty or not. If it is empty, a check is made in step S0808 to determine if the selection is set to Y or not. If not, then an error message is shown to the user in step S0812. If, however, the selection is set to Y, then words from selected area are fetched as search keywords in step S0809. In step S0810, parameters are fetched from the database.

If, however, the search edit box is not empty, then in step S0807, words from search edit box are fetched as keyword search. This step is followed by step S0810.

If the search function key is not pressed, then step S0810 is followed.

Following step S0810, function with parameters, search keywords and selection flags is called in step S0811 and the process ends.

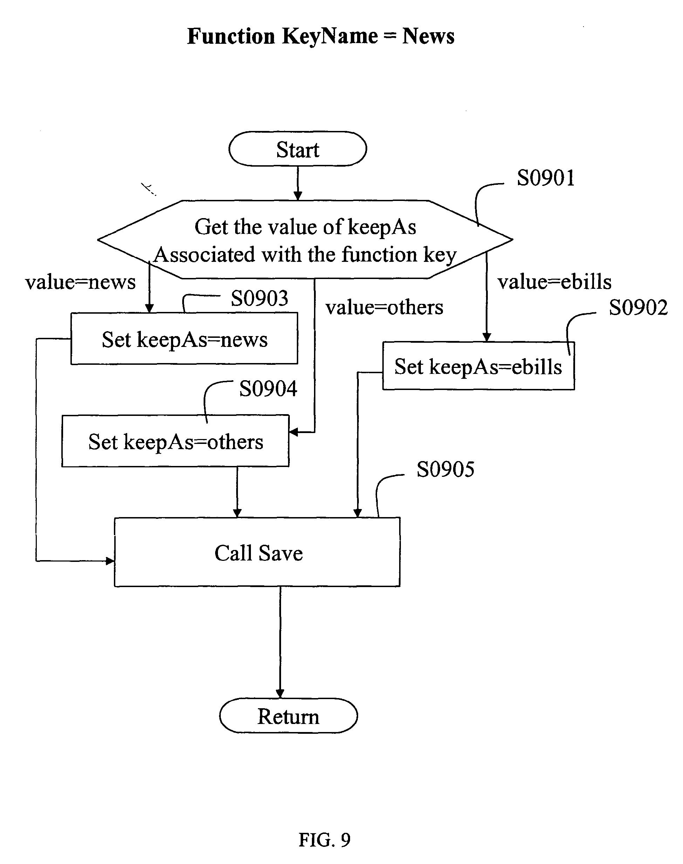

Fig. 9 is a flowchart of exemplary procedural steps when the function key is associated to News. In step S0901, values of KeepAs associated with the function key is fetched. If the value fetched is news, then in step S0903, KeepAs is set to news. However, if the value fetched is ebills, then in step S0902, the KeepAs is set to ebills. If any other value is fetched, then in step S0904, KeepAs is set to others. The save function is called in step S0905 and the process ends.

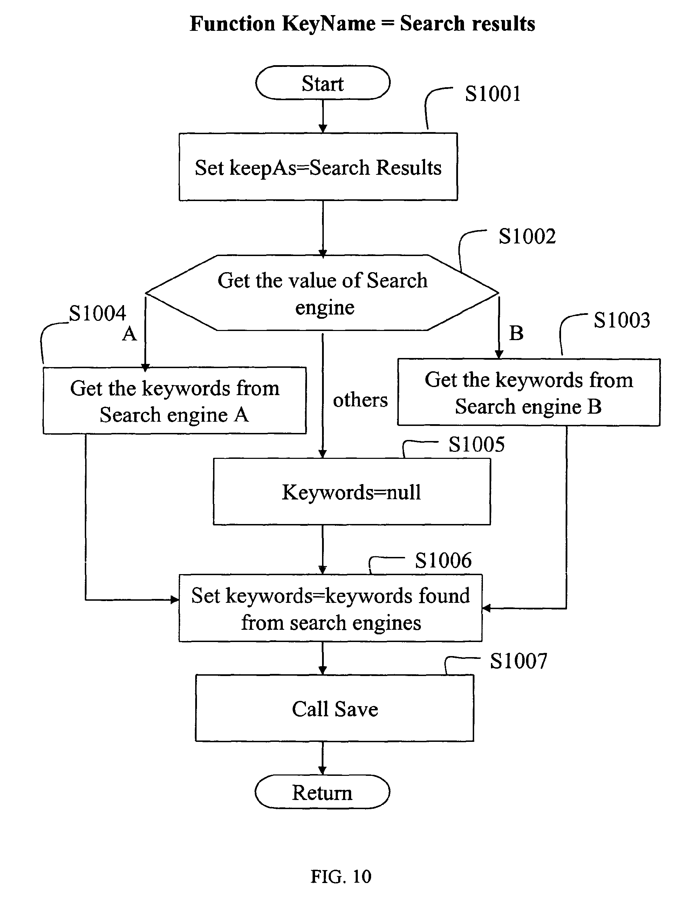

Fig. 10 is a flowchart of exemplary procedural steps when the Function key is associated to Search Results. In step S1001, KeepAs is set to Search Results. Then, the value of the search engine is fetched in step S1002. If the fetched search engine is A, then the keywords are fetched from search engine A in step S1004. Otherwise, if the fetched search engine is B, then in step S1003, the keywords are fetched from search engine B. In any other case, the keywords is set to null in step S1005. Then, in step S1006, keywords are set to the keywords found from search engines. In step S1007, Save function is called and the process ends.

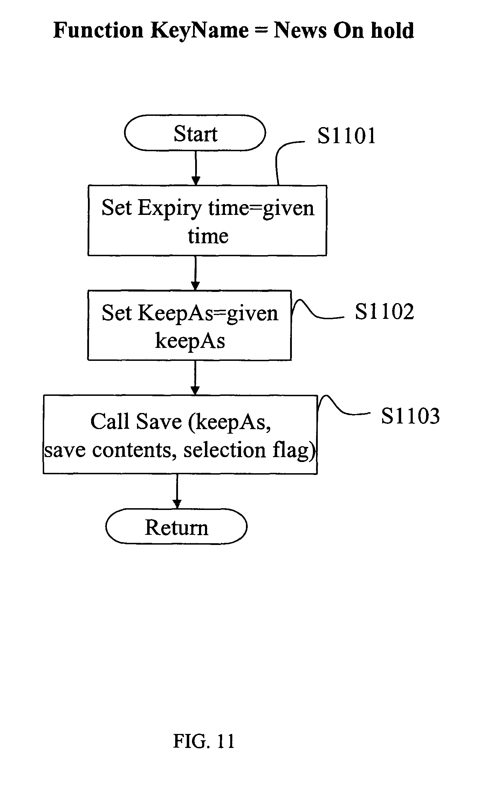

Fig. 11 is a flowchart of exemplary procedural steps when the Function key is associated to News On hold. In step S1101, expiry time is set to the given time. In step S1102, KeepAs is set to the given KeepAs. Then, in step S1103, the Save function is called and the process ends.

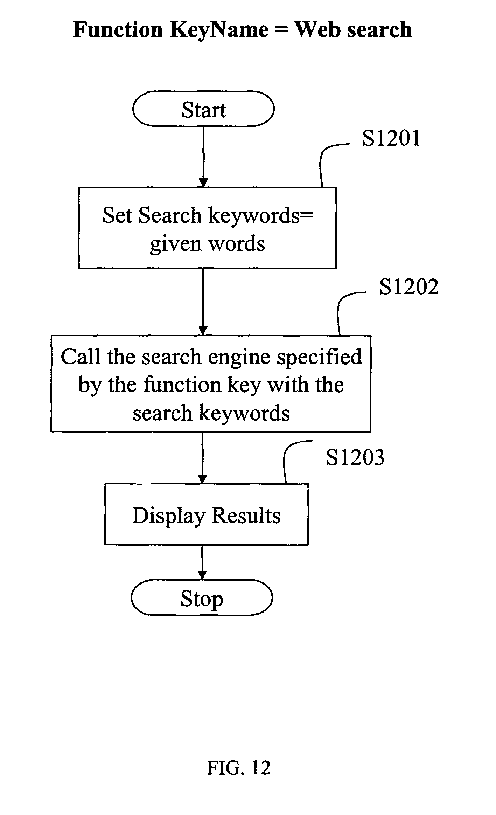

Fig. 12 is a flowchart of exemplary procedural steps when the Function key is associated to Web Search. In step S1201, Search keywords are set to given words. Then, in step S1202, the search engine specified by the function key with the search keywords is called. The results are finally displayed in step S1203 and the process ends.

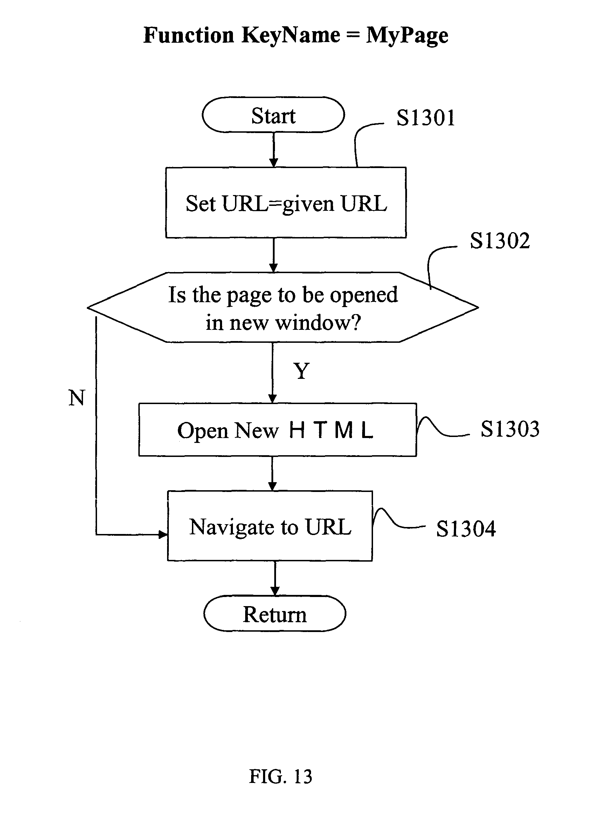

Fig. 13 is a flowchart of exemplary procedural steps when the Function key is associated to MyPage. In step S1301, URL is set to the given URL. In step S1302, a check is made to determine whether the page is to be opened in a new window or not. If it is to be opened in a new window, then in step S1303, a new HTML is opened. Finally, navigate to the given URL in step S1304 and the process ends. However, if the page is not to be opened in a new window, then the process is simply directed to step S1304.

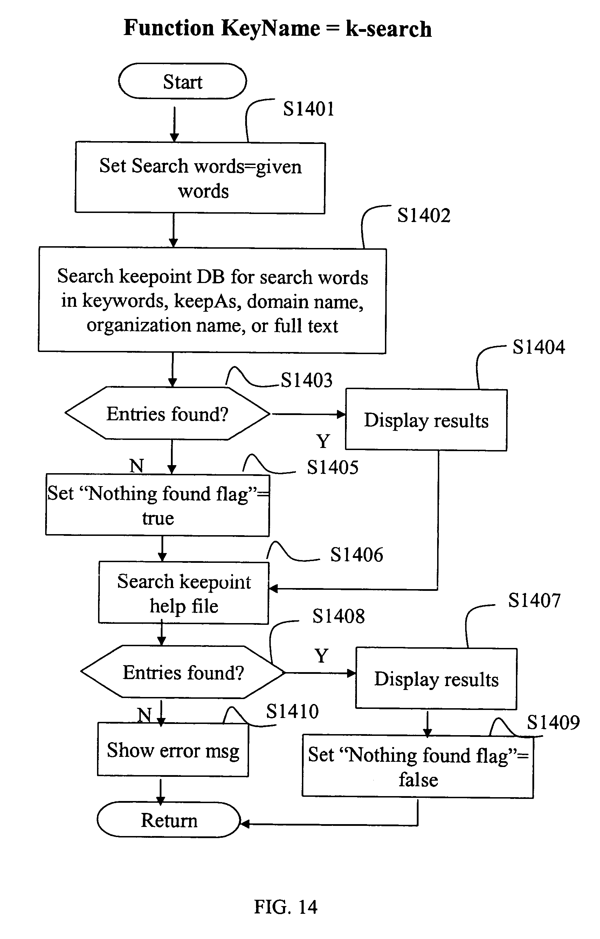

Fig. 14 is a flowchart of exemplary procedural steps when the Function key is associated to k-search. In step S1401, search words are set to the given words. Then, in step S1402, system DB is searched for search words in keywords, KeepAs, domain name, organization name or full text. In step S1403, a check is made to determine if any entries are found or not.

If any entries are found, then in step S1404, the results are displayed. Otherwise, in step S1405, the Nothing found flag is set to true. The system help file is then searched in step S1406. Again, in step S1408, a check is made to determine if any entries are found or not. If no entries are found, then an error message is displayed in step S1410 and the process ends. If, however, any entries are found, then the results are displayed in step S1407, the Nothing found flag is set to false in step S1409 and the process ends.

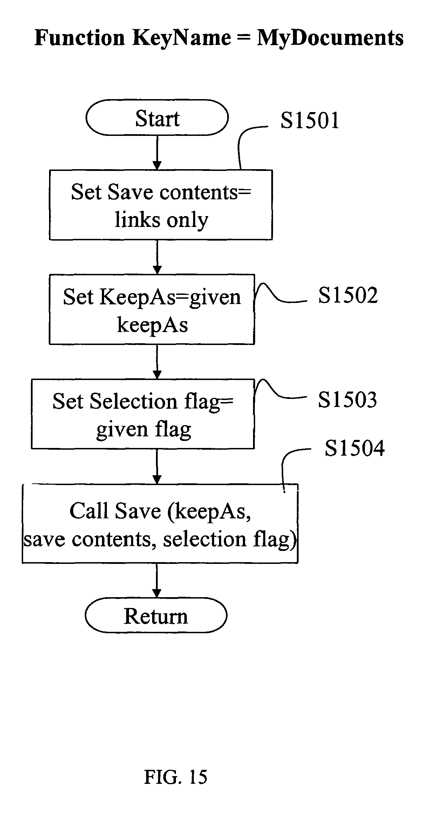

Fig. 15 is a flowchart of exemplary procedural steps when the Function key is associated to MyDocuments. In step S1501, the Save Contents option is set to links only. In step S1502, KeepAs is set to the given KeepAs and Selection Flag is set to the given flag in step S1503. Then, in step S1504, the Save function is called and the process ends.

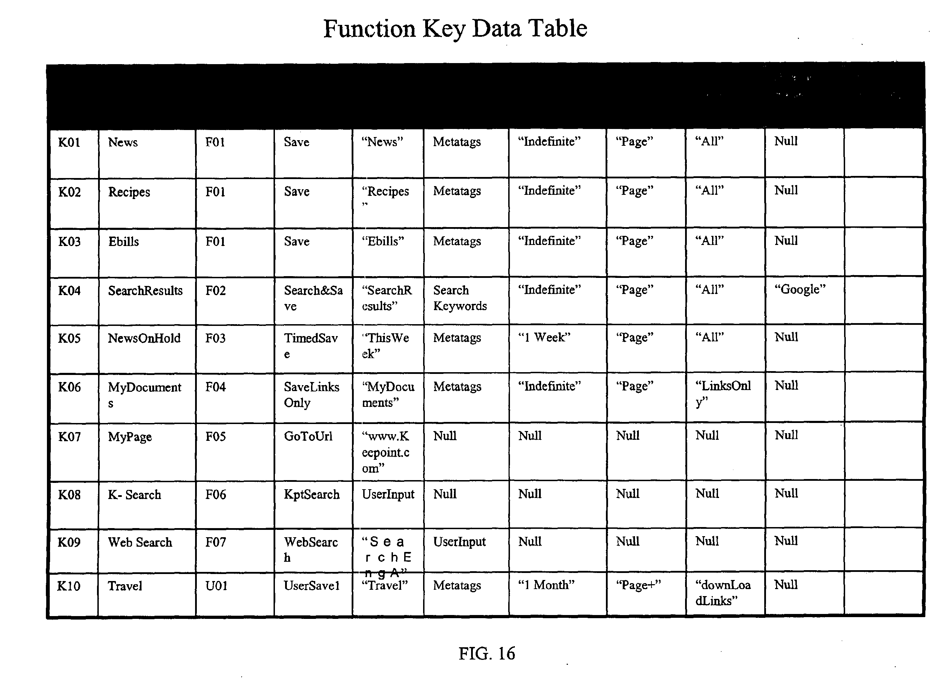

Fig. 16 shows a table which gives an example content for Function Key associations with information pertaining to Function Key name, Function Id, Function Name, the various parameter values etc.

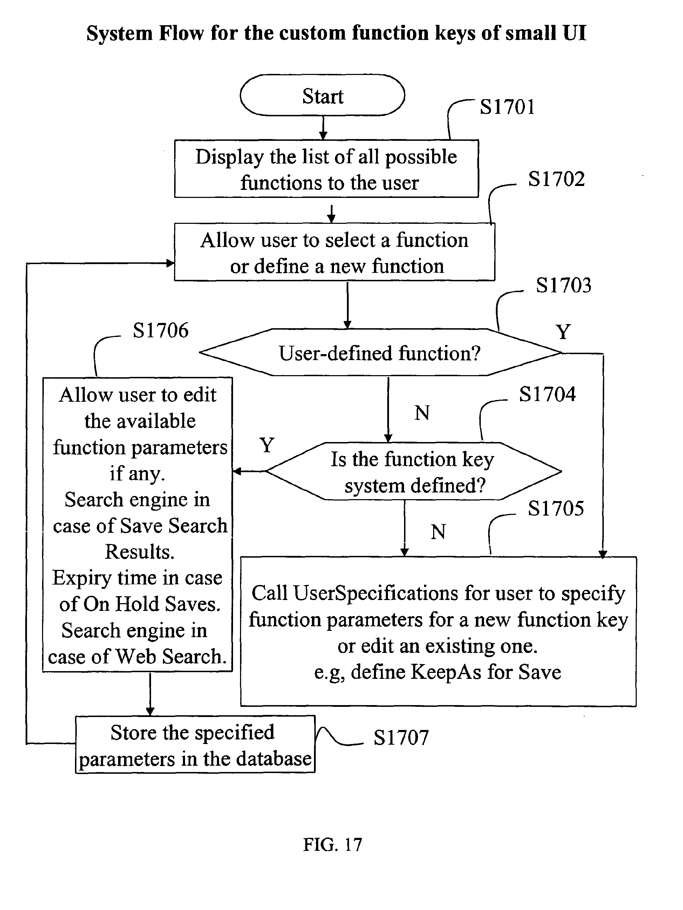

Fig. 17 is a flowchart of exemplary procedural steps of the system flow for the custom function keys of small UI. In step S1701, the list of all possible functions is displayed to the user. In step S1702, the user is allowed to select a function or define a new function.

In step S1703, the check is made to determine if the function is user defined or not. If it is not, then in step S1704, a check is made to determine if the function key is system defined or not. If not, then the UserSpecifications is called in step S1705 for user to specify function parameters for a new function key or edit an existing one and the process ends. If the check in step S1703 determines that the function is user defined, then step S1705 is followed and the process ends.

However if the function key is system defined then in step S1706, the user is allowed to edit the available function parameters, if any. Function parameters are search engine in case of Save Search Results, expiry time in case of On Hold Saves and search engine in case of Web Search. In step S1707, the specified parameters are stored in the database and then it goes back to step S1702.

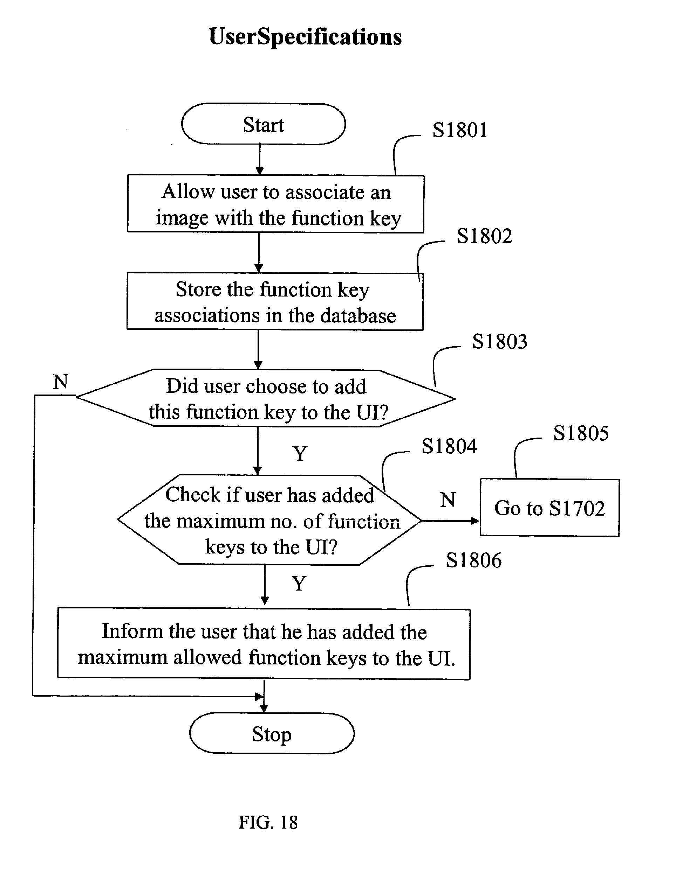

Fig. 18 is a flowchart of the procedural steps of UserSpecifications. In step S1801, user is allowed to associate an image with the function key. In step S1802, the function key associations are stored in the database. In step S1803, a check is made to determine if the user chose to add this function key to the UI. If not, then the process ends. If, however, the user chose to add the function key to the UI, then a check is made in step S1804 to determine if the user has added the maximum number of function keys to the UI. If not, then in step S1805, the process goes to step S1702 of Fig. 17. However, if the maximum number of function keys have been added to the UI, then in step S1806, the user is informed that he has added the maximum allowed function keys to the UI and the process ends.

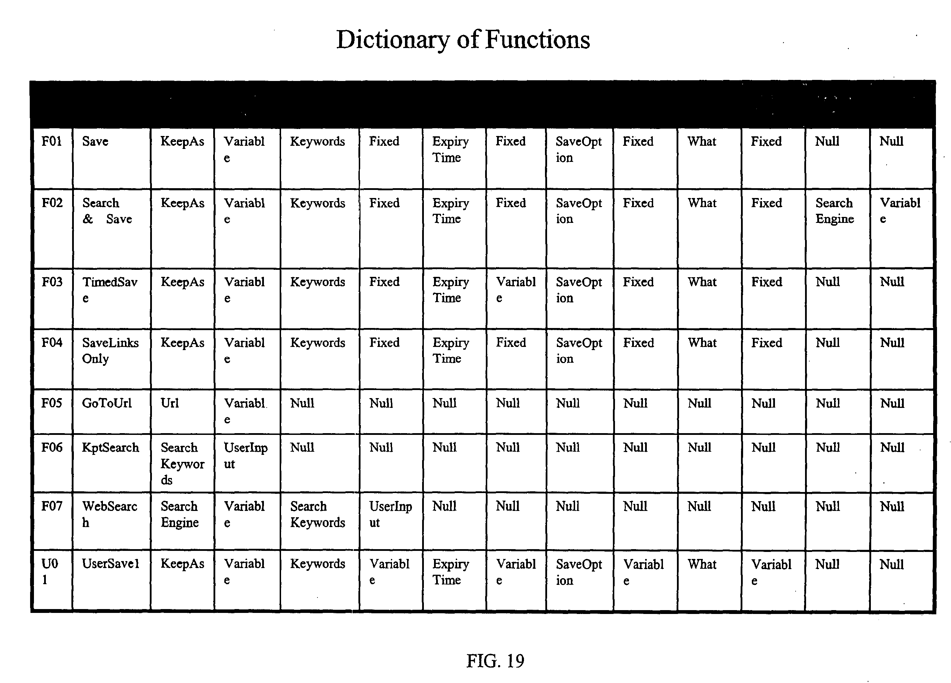

Fig. 19 shows a table which gives example content for the Dictionary of Functions with information regarding the User Id, Function Name, the various types of parameters along with their names etc.

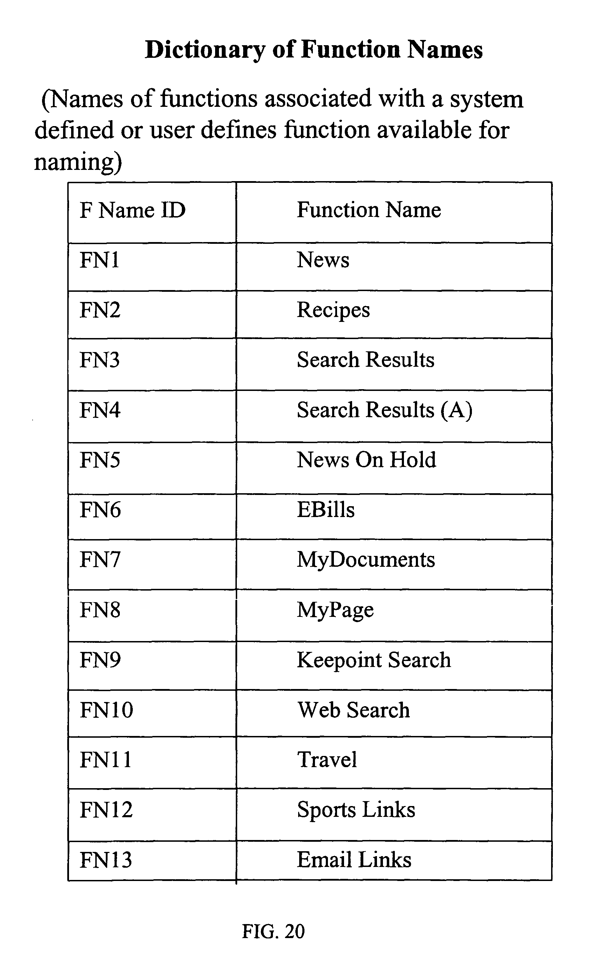

Fig. 20 shows a table which gives example content for the Dictionary of Function Names with information regarding the Function Name Ids and Function Names. The function names are either system defined or user defined.

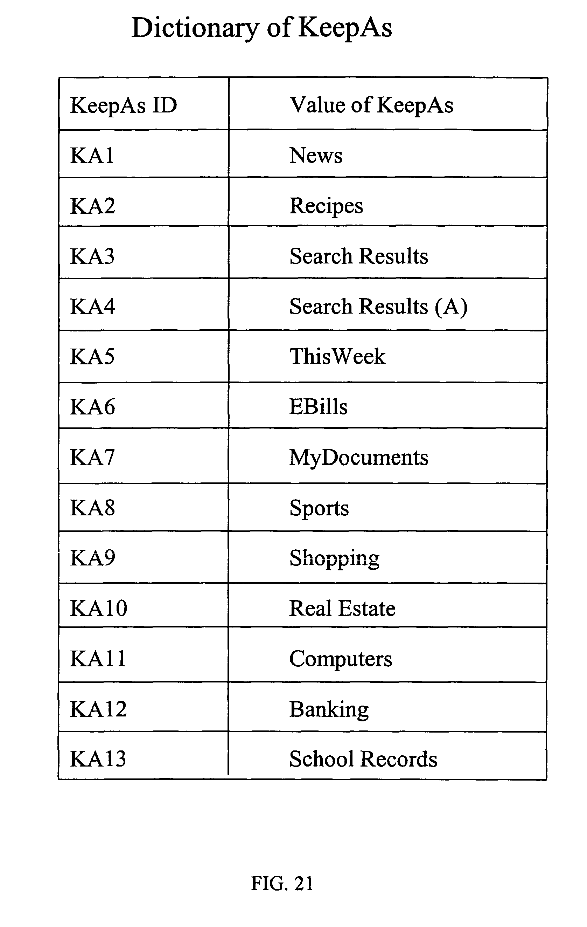

Fig. 21 shows a table which gives example content for the Dictionary of KeepAs with information regarding the KeepAs Id and the value of KeepAs.

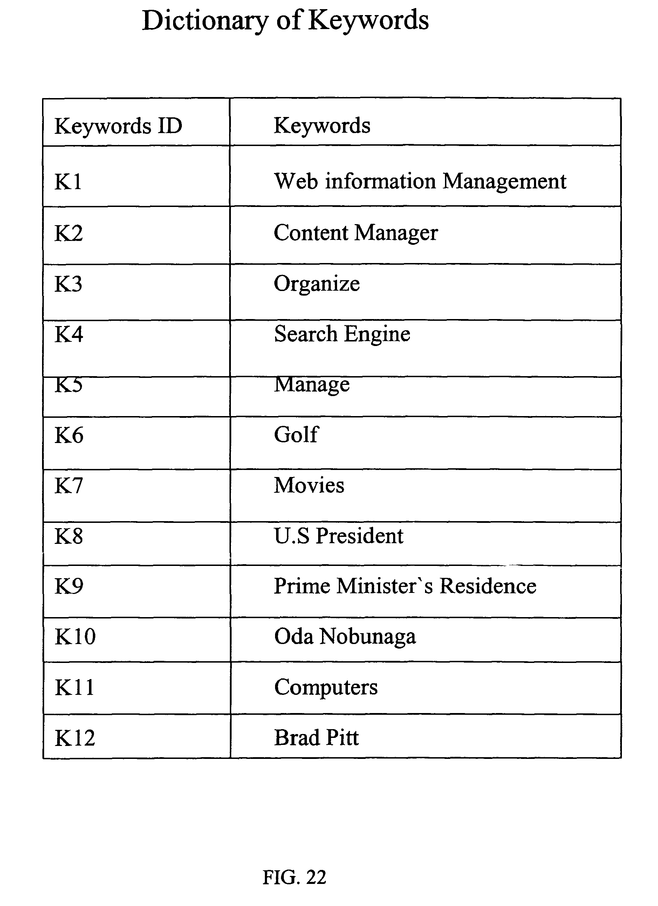

Fig. 22 shows a table which gives example content for the Dictionary of Keyword with information pertaining to the Keywords Id and the Keywords.

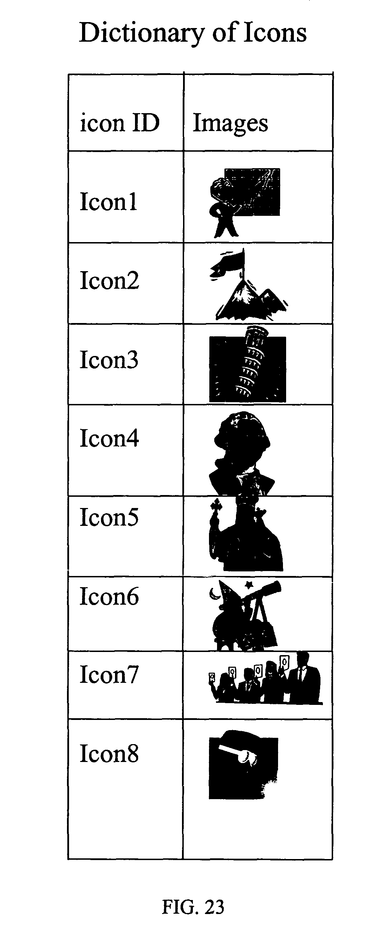

Fig. 23 shows a table for the Dictionary of Icons. The table gives example content for the Dictionary of Icons with information pertaining to the Icon Id and the Images.

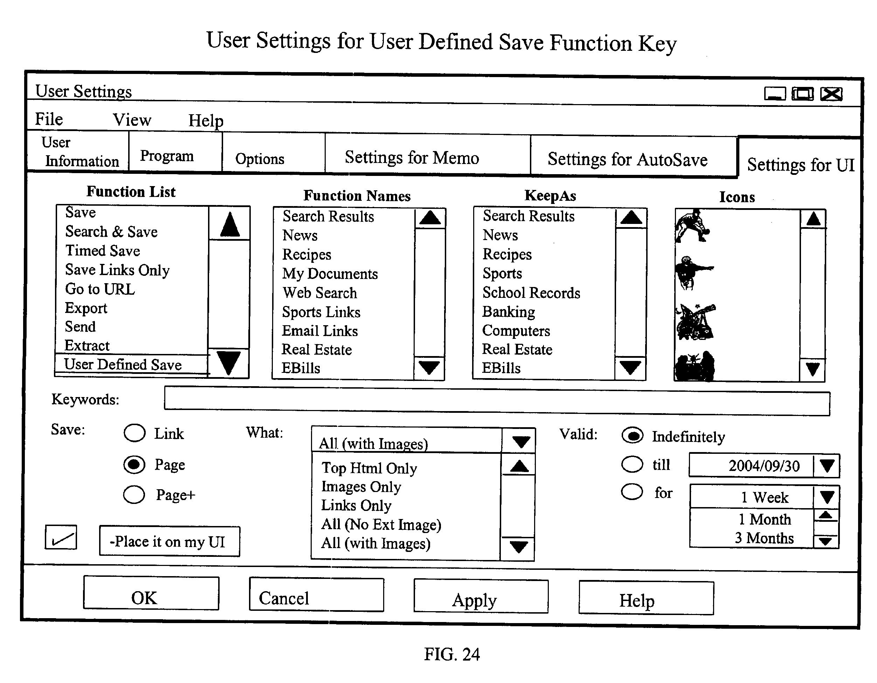

Fig. 24 shows user settings for user defined save function key. The table gives an example of the User Settings for User Defined Save Function Key which gives information pertaining to the Function List, Function Names, KeepAs, Icons etc.

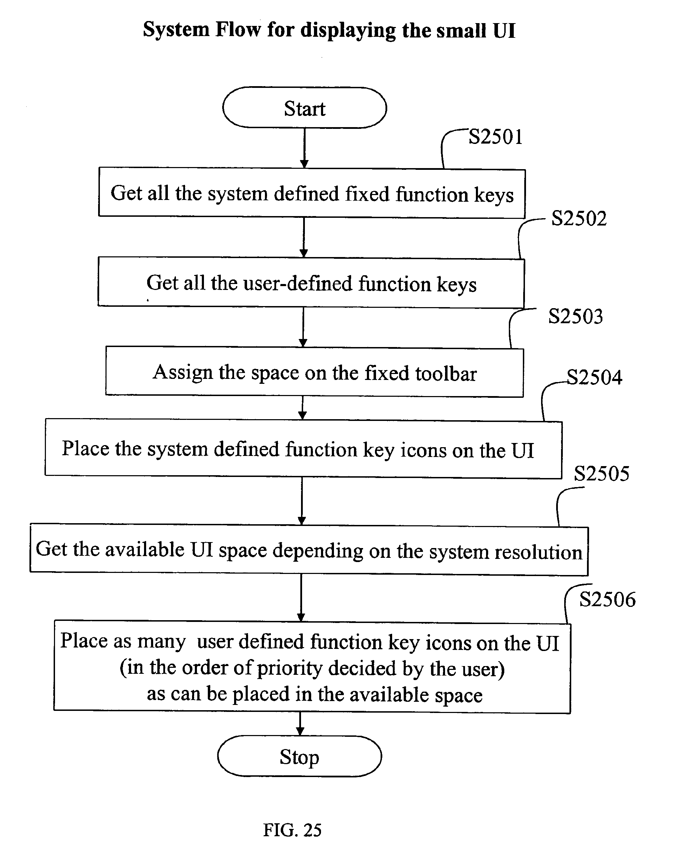

Fig. 25 is a flowchart of an exemplary system flow for displaying the small UI. In step S2501, all the system defined fixed function keys are obtained. Then, in step S2502, all the user-defined function keys are obtained. In step S2503, space is assigned on the fixed toolbar. The system defined function key icons are then placed on the UI in step S2504.

In step S2505, the available UI space is obtained depending on the system resolution. Finally, in step S2506, place as many user defined function key icons on the UI as can be placed in the available space and the process ends.

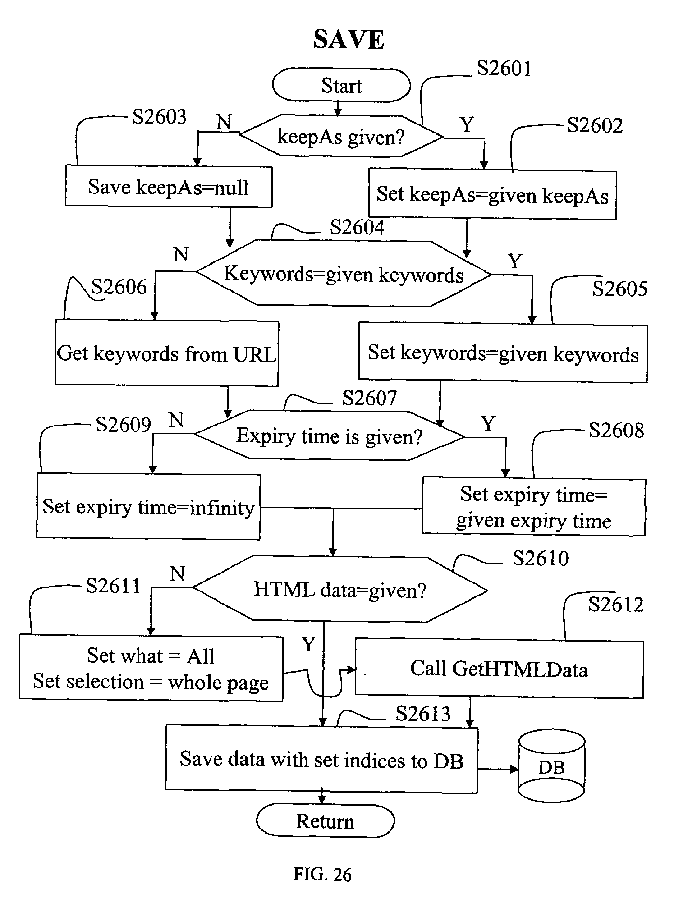

Fig. 26 is a flowchart of exemplary procedural steps of SAVE. In step S2601, a check is made to determine if KeepAs is given or not. If it is given, then in step S2602, the KeepAs is set to given KeepAs. If not, then in step S2603, KeepAs is saved as null.

In step S2604, a check is made to determine if keywords are given or not. If keywords are given, then keywords are set to given keywords in step S2605. If not, then in step S2606, keywords are fetched from the URL.

In step S2607, a check is made to determine if the expiry time is given or not. If it is given, then in step S2608, the expiry time is set to the given expiry time. If not, then in step S2609, expiry time is set to infinity. In step S2610, a check is made to determine if the HTML data is given or not. If it is not given, then what is set to all and the selection is set to the whole page. In step S2612, GetHTMLData function is called. Then, in step S2613, data is saved with set indices to DB and the process ends. However, if the check in step S2610 determines that the HTML data is given, then the step S2613 is followed and the process ends.

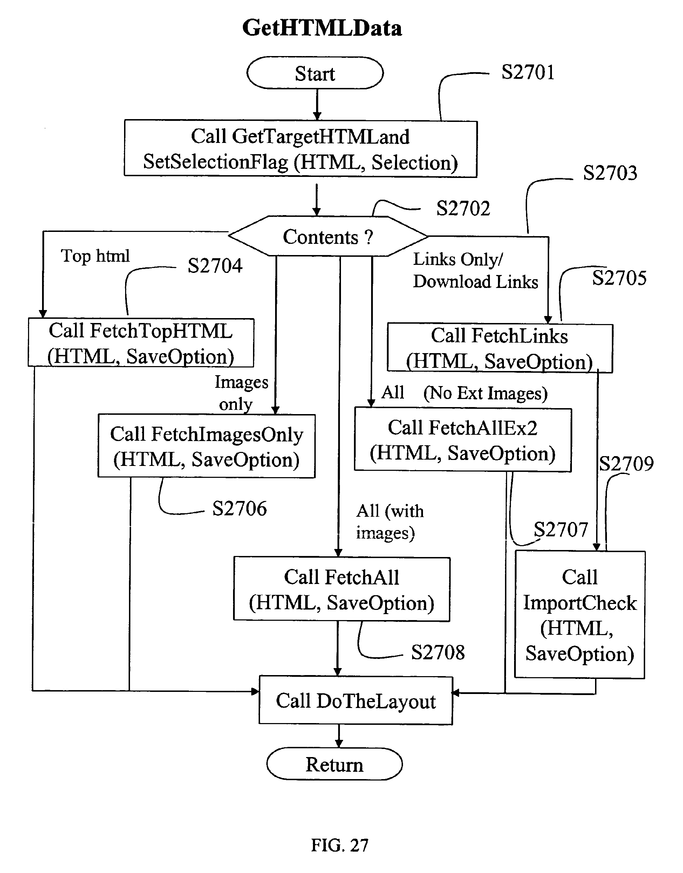

Fig. 27 is a flowchart of exemplary procedural steps of GetHTMLData function. In step S2701, GetTargetHTMLandSetSelectionFlag function is called. In step S2702, a check is made to determine the contents. If the content is Top HTML, then in step S2703 FetchTopHTML function is called in step S2703 and then DoTheLayout function is invoked and the process ends. If the content is Images Only, then in step S2706 FetchImagesOnly function is invoked and then DoTheLayout function is called and the process ends. If the content is All (with images), then in step S2708 FetchAll function is called and then DoTheLayout function is invoked and the process ends. If the content is All (no ext. images), then in step S2707 FetchAllEx2 function is called and then the DoTheLayout function is invoked and the process ends. If the content chosen is Links Only or Download Links, then in step S2705 FetchLinks function is invoked. In step S2709, ImportCheck function is called and then DoTheLayout function is invoked and the process ends.

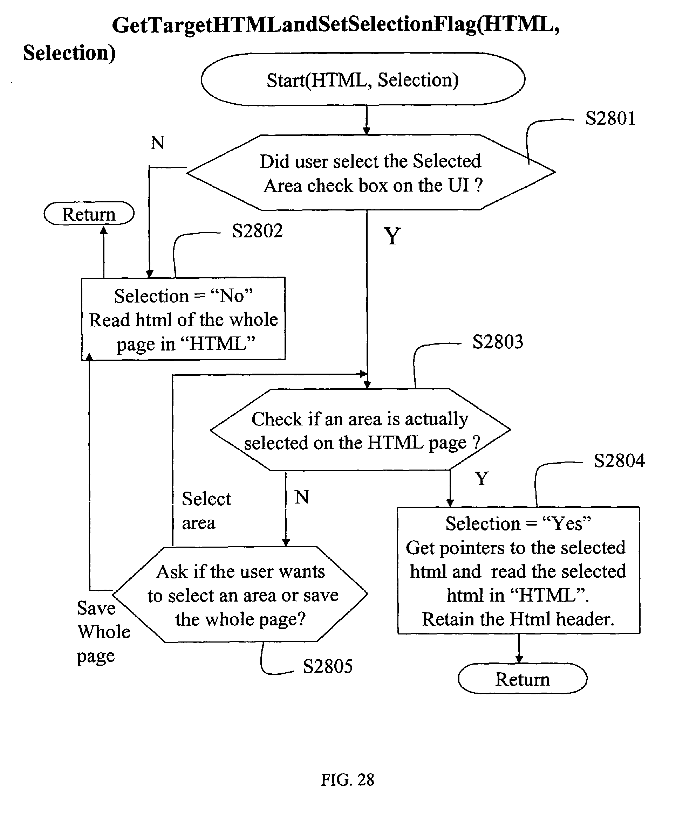

Fig. 28 is a flowchart of exemplary procedural steps of GetTargetHTMLandSetSelectionFlag function. In step S2801, a check is made to determine if the user selected the Selected Area check box on the UI. If not, then in step S2802, selection is set to No and the html of the whole page is read in 'HTML' and the process ends. However, if the user selected the Selected Area check box on the VI, then a check is made in step S2803 to determine if an area is actually selected on the HTML page. If selected, then in step S2804 Selection is set to yes, pointers to the selected HTML are fetched, the selected HTML is read in HTML and the Html header is retained and the process ends.

If an area is not selected on the HTML page, then in step S2805, the user is asked if he wants to select an area or select the whole page. If user selects an area, then the process goes back to step S2803. However, if the user decides to select the whole page, then the process goes back to step S2802 and the process ends.

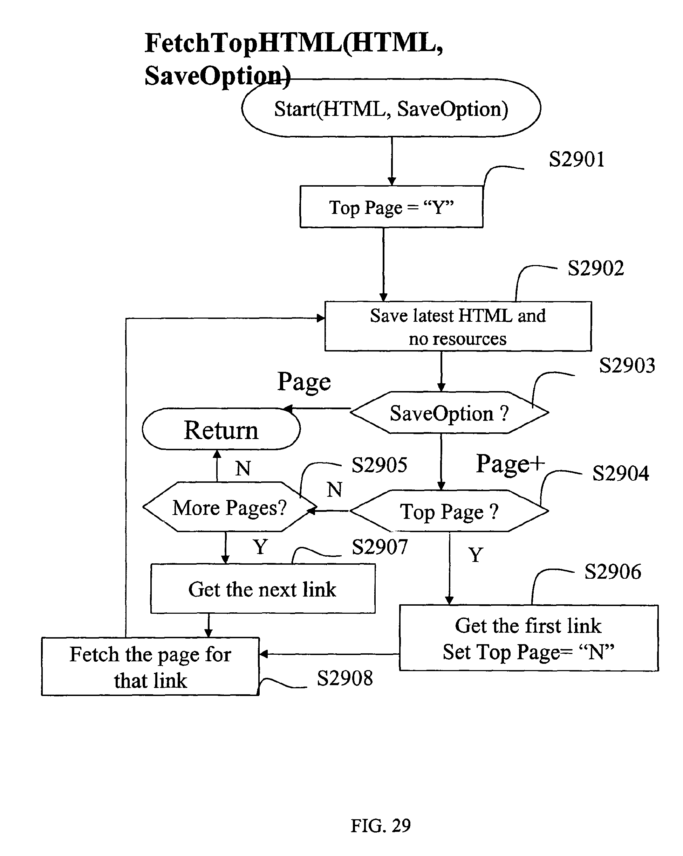

Fig. 29 is a flowchart of exemplary procedural steps of FetchTopHTML function. In step S2901, Top Page is set to Y. In step S2902, the latest HTML is saved, but the resources are not saved. In step S2903, a check is made to determine the SaveOption. If the SaveOption is Page, then the process ends. However, if the SaveOption is Page+, then in step S2904 a check is made to determine if the Top Page is set to Y or N. If it is set to Y, then in step S2906 the first link is fetched and Top Page is set to N. In step S2908, the page for that link is fetched and the process goes to step S2902. If the check in step S2904 determined that the Top Page was set to N, then in step S2905 a check is made to determine if there are more pages to be fetched. If no, then the process ends. However, if more pages are to be fetched, then in step S2907, the next link is fetched and the process follows step S2908.

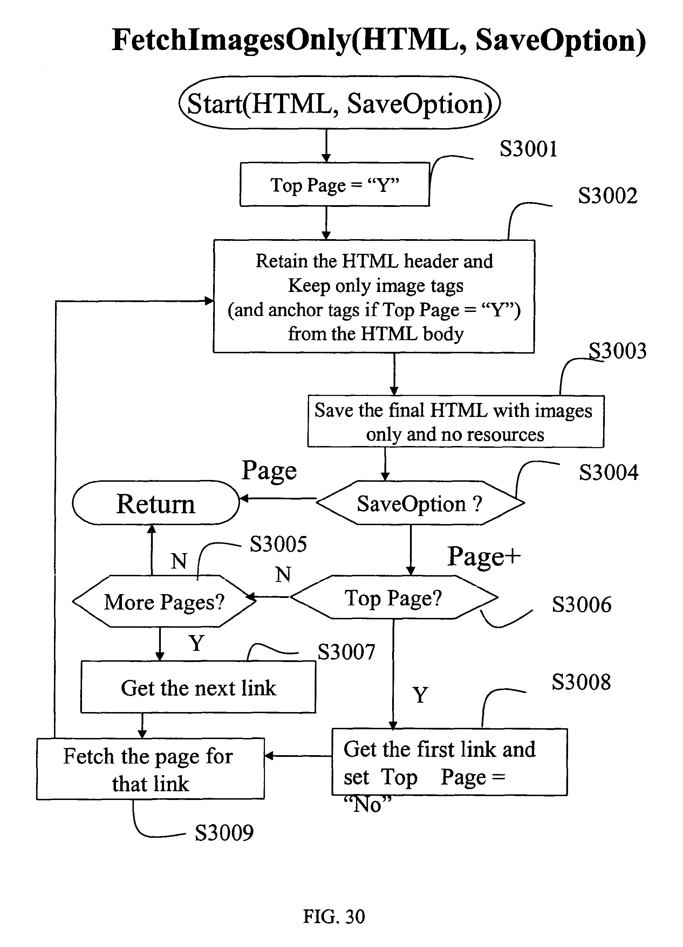

Fig. 30 is a flowchart of exemplary procedural steps of FetchImagesOnly function. In step S3001, the top page is set to Y. In step S3002, the HTML header is retained and only image tags (and anchor tags if top page is set to Y) are kept from the HTML body. In step S3003, the final HTML is saved with images only and no resources are saved. Then, in step S3004, a check is made to determine the SaveOption. If it is Page, then the process ends. However, if it is Page+, then again a check is made in step S3006 to determine the top page. If the top page is set to N, a check is made in step S3005 to determine if there are more pages or not. If there are no more pages, the process ends. However, if there are more pages, the next link is obtained in step S3007, the page corresponding to that link is fetched in step S3009 and the process is directed to step S3002.

However, if the top page is set to Y in step S3006, then the first link is obtained and the top page is set to N in step S3008 and the process is directed to step S3002 through step S3009.

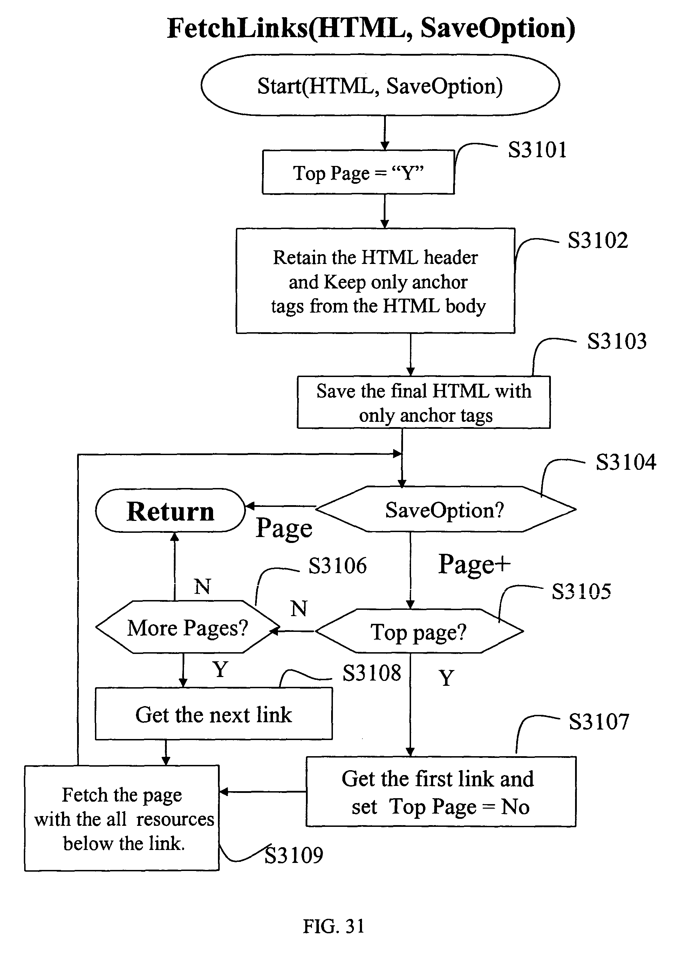

Fig. 31 is a flowchart of exemplary procedural steps of FetchLinks function. In step S3101, the top page is set to Y. In step S3102, the HTML header is retained and only the anchor tags from the HTML body are kept. In step S3103, the final HTML is then saved with only the anchor tags. Then, in step S3104, a check is made to determine the SaveOption. If it is Page, then the process ends. However, if it is Page+, then again a check is made in step S3105 to determine the top page. If the top page is set to N, a check is made to determine if there are more pages or not in step S3106. If there are no more pages, the process ends. However, if there are more pages, the next link is obtained in step S3108, the page corresponding to that link is fetched with all the resources in step S3109 and the process is directed to step S3104.

However, if the top page is set to Y in step S3105, then the first link is obtained and the top page is set to N in step S3107 and the process is directed to step S3104 through step S3109.

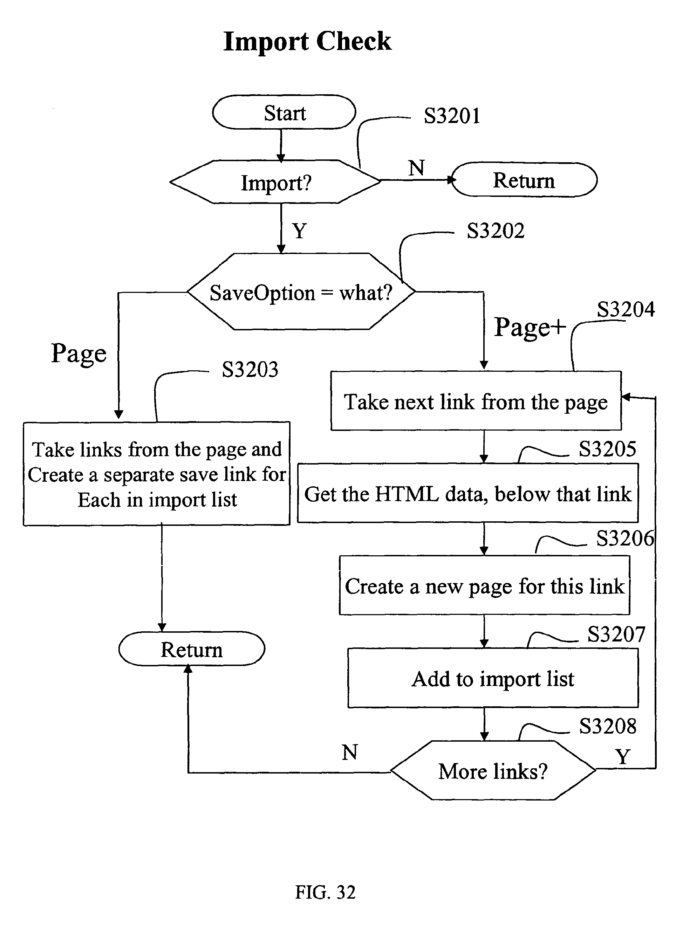

Fig. 32 is a flowchart of exemplary procedural steps for Import Check. In step S3201, a check is made to determine if anything needs to be imported or not. If not, the process ends. Otherwise, the Save option is checked for Page or Page+ in step S3202. If it is Page, then in step S3203 links are taken from the page, a separate save link is created for each in the import list and the process ends. However, if the Save option is Page+, then in step S3204 a link is taken from the next page, the HTML data below that link is fetched in step S3205 and a new page is created for this link in step S3206 which is then added to the import list in step S3207. Finally in step S3208, a check is made whether there are more links or not. If not, the process ends. Otherwise, the process is directed to step S3204.

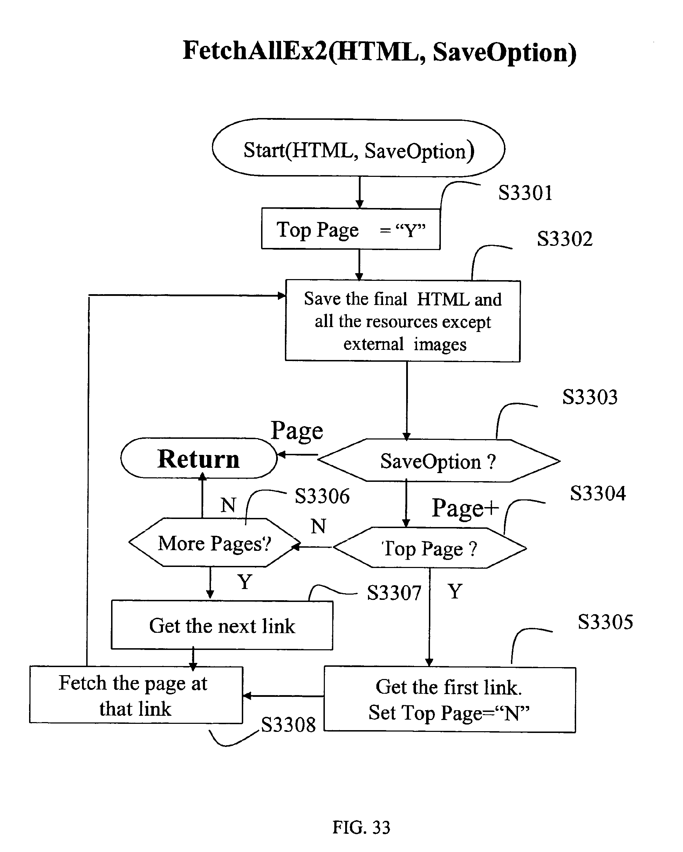

Fig. 33 is a flowchart of exemplary procedural steps of FetchAllEx2 function. In step S3301, the top page is set to Y. In step S3302, the final HTML and all the resources except the external images are saved. In step S3303, a check is made to determine the SaveOption. If it is Page, then the process ends. However, if it is Page+, then again a check is made in step S3304 to determine the top page. If the top page is set to N, a check is made to determine if there are more pages or not in step S3306. If no more pages are there, the process ends. However, if there are more pages, the next link is obtained in step S3307, the page corresponding to that link is fetched in step S3308 and the process is directed to step S3302.

However, if the top page is set to Y in step S3304, then the first link is obtained and the top page is set to N in step S3305 and the process is directed to step S3302 through step S3308.

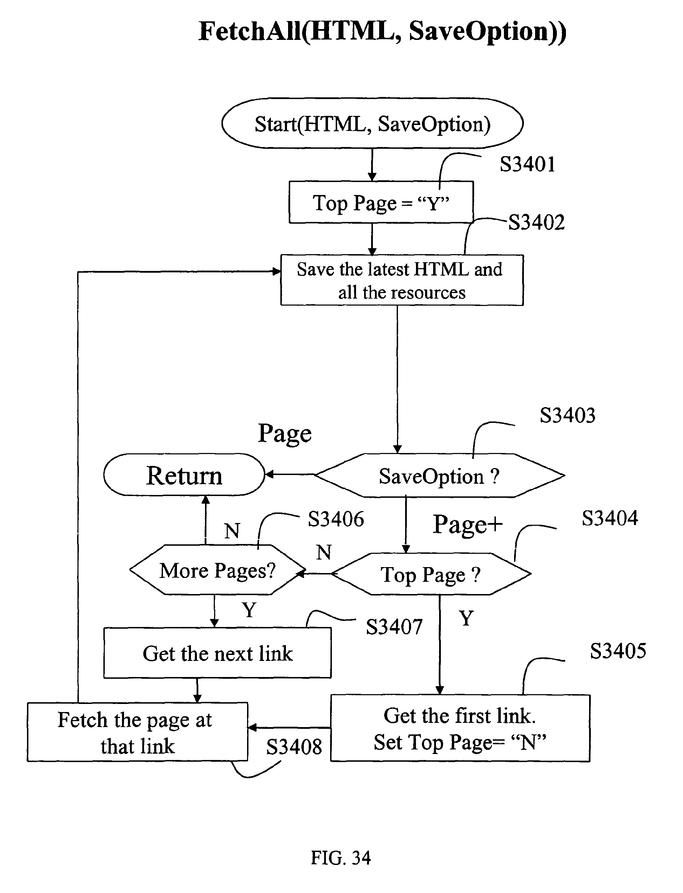

Fig. 34 is a flowchart of exemplary procedural steps of FetchAll function. In step S3401, TopPage is set to Y. In step S3402, the latest HTML and all the resources are saved. In step S3403, a check is made to determine the SaveOption. If the SaveOption is Page, then the process ends. However, if the SaveOption is Page+, then in step S3404 a check is made to determine if the Top Page is set to Y or N. If it is set to Y, then in step S3406 the first link is fetched and top page is set to N. In step S3408, the page for that link is fetched and the process goes to step S2902 of Fig. 29. If the check in step S3404 determined that the top page was set to N, then in step S3405 a check is made to determine if there are more pages to be fetched. If no, then the process ends. However, if more pages are to be fetched, then in step S3407 the next link is fetched and the process follows step S3408.

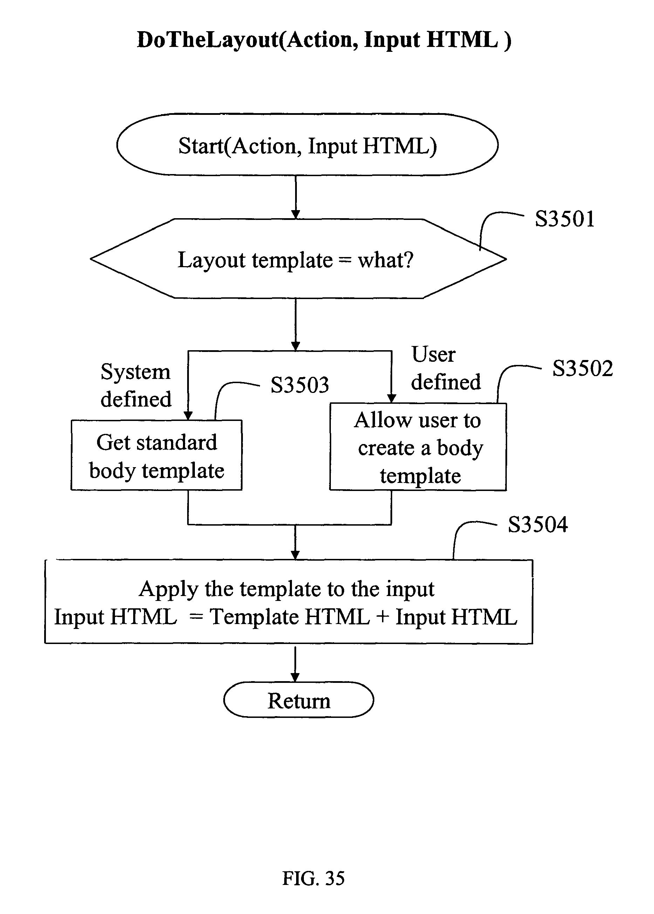

Fig. 35 is a flowchart of exemplary procedural steps of DoTheLayout. In step S3501, the layout template is looked for. If it is user defined, then in step S3502, user is allowed to create a body template. If it is system defined, then in step S3503, standard body template is fetched. Then in step S3504, the template is applied to the input and the process ends.

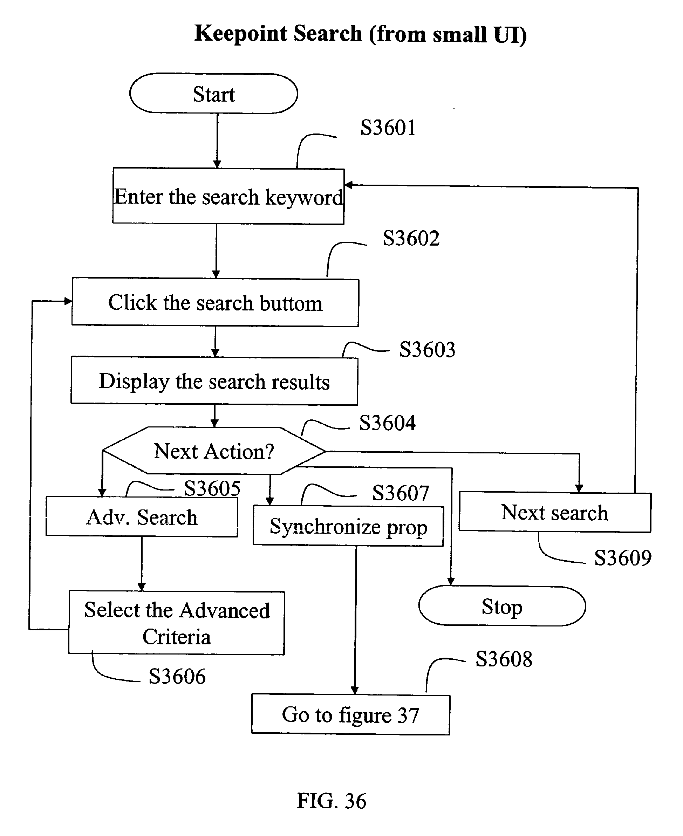

Fig. 36 is a flowchart of exemplary procedural steps for system search from small UI. The search keyword is entered in step 3601, the search button is clicked in step S3602 and then in step S3603 the search results are displayed. The next action is then checked for in step S3604.

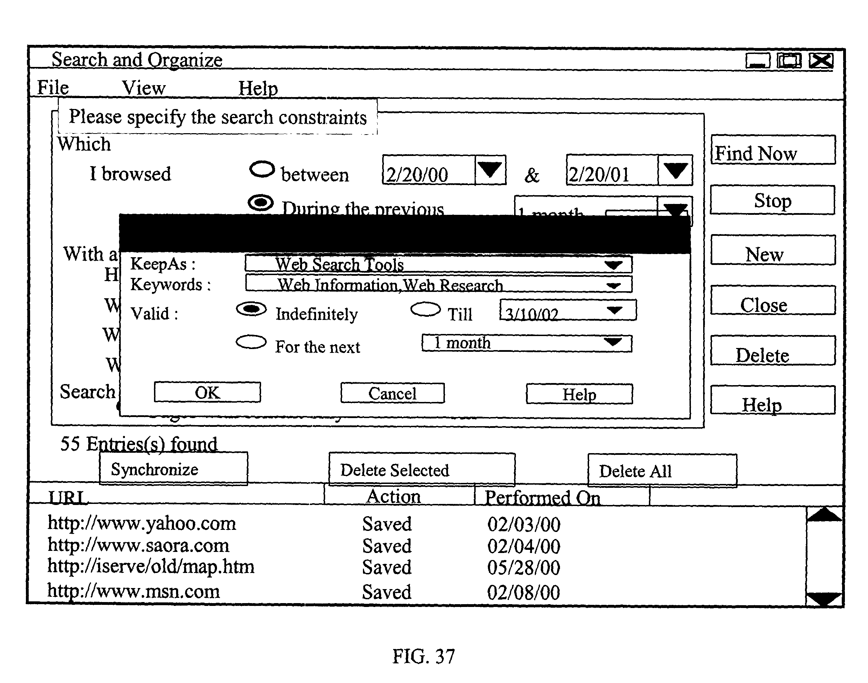

If the next action to be performed is Advanced Search (step S3605), then in step S3606 the Advanced criteria is selected and the flow is directed to step S3602. If the next action to be performed is Next Search (step S3609), then the process is directed to step S3601. If the next action to be performed is Synchronize properties (step S 3607), then go to Fig. 37 in step S3608 and the process ends if none of these are performed.

Fig. 37 shows an example content displaying the synchronize properties available in the system. Synchronize properties contain information regarding the KeepAs, keywords and validity of the documents and appear in the search and organize browser window of the internet explorer.

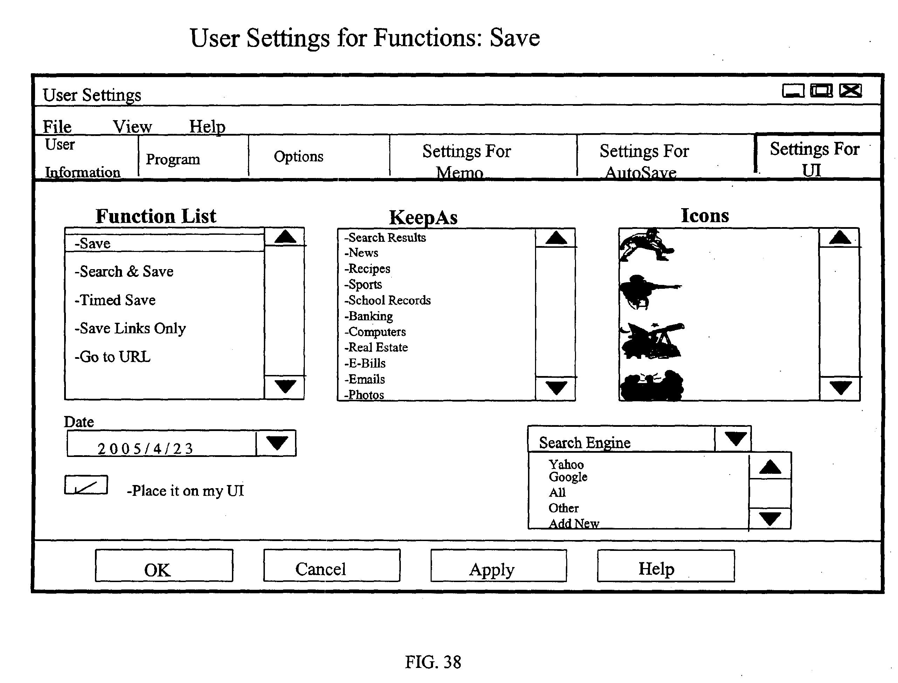

Fig. 38 gives an outlook of the browser window for the User Settings for the function Save. When this function is selected from the Function List, a list of folders appears under KeepAs and we can save our program under any of these.

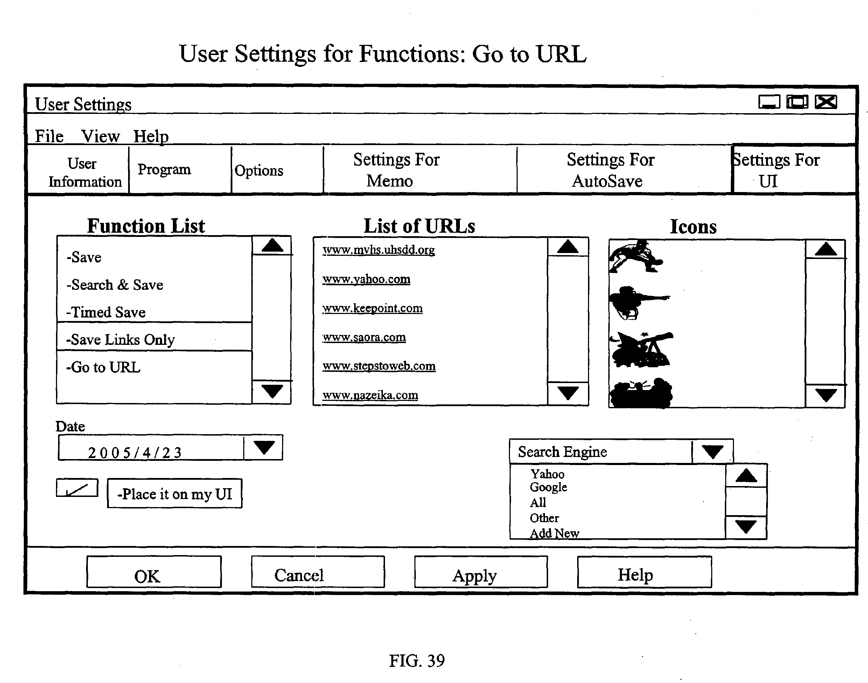

Fig. 39 gives an outlook of the browser window for the User Settings for the function Go To URL. When this function is selected from the Function List, a complete list of URLs appears and we can use any of the URLs depending on our requirement.

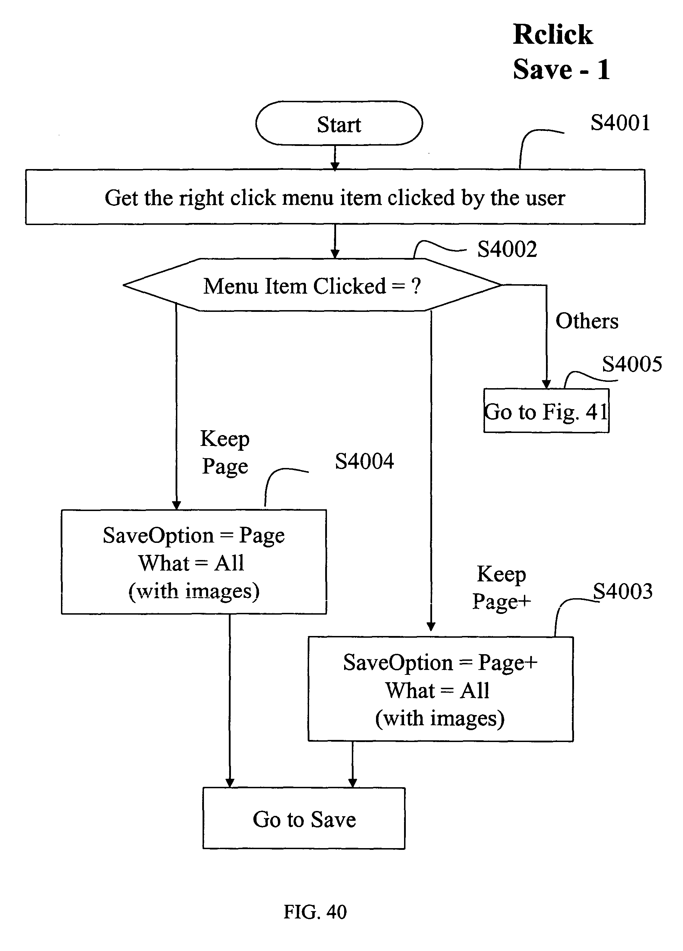

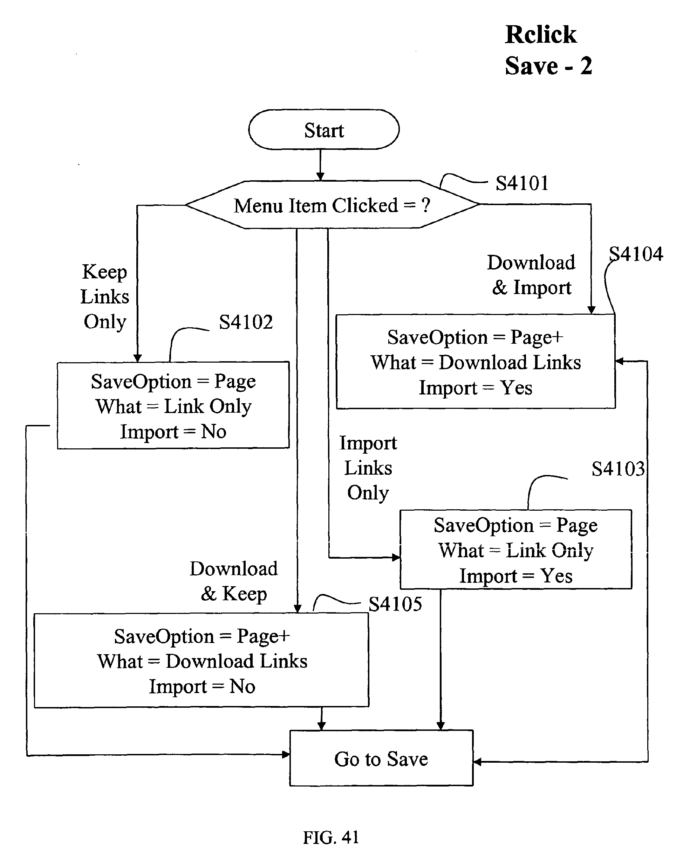

Figs. 40 and 41 are flowcharts of exemplary procedural steps for right click Save. In step S4001, the right click menu item clicked by the user is fetched. In step S4002, menu item clicked is checked. If it is Keep Page, then in step S4004, SaveOption is set to Page, and What is set to All (with images) and the process goes to Save. If the menu item clicked is Keep Page+, then in step S4003, SaveOption is set to Page+ and What is set to All (with images) and the process goes to save. If any other menu item is clicked, then in step S4005, process goes to Fig. 41.

In step S4101 of Fig. 41, menu item clicked is checked. If it is Keep Links Only, then in step S4102 SaveOption is set to Page, What is set to Link Only, Import is set to No and the process goes to Save. If the menu item clicked is Import Links Only, then in step S4103 SaveOption is set to Page, What is set to Link Only, Import is set to Yes and the process goes to Save. If the menu item clicked is Download and Import, then in step S4104, SaveOption is set to Page+, What is set to Download Links and Import is set to Yes and the process goes to Save. If the menu item clicked is Download and Keep, then in step S4105 SaveOption is set to Page+, What is set to Download Links and Import is set to No and the process goes to Save.

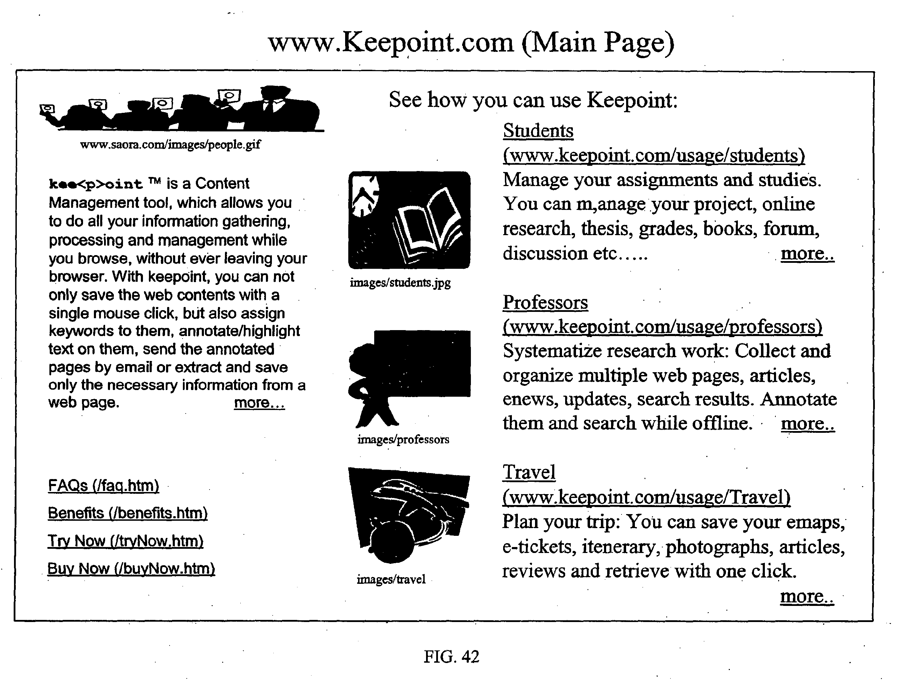

Fig. 42 shows exemplary results of Quick Save, i.e., the saved page when the Quick Save action has been performed.

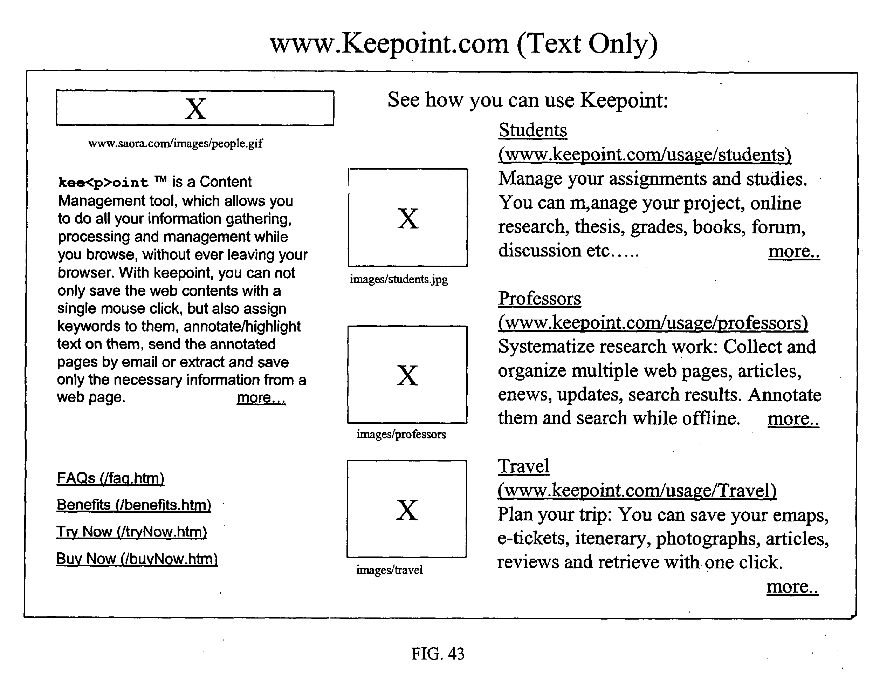

Fig. 43 shows an exemplary result of Advanced Save with Text Only save option. The page reflects the Text Only save option as only the text and no images have been saved throughout the page.

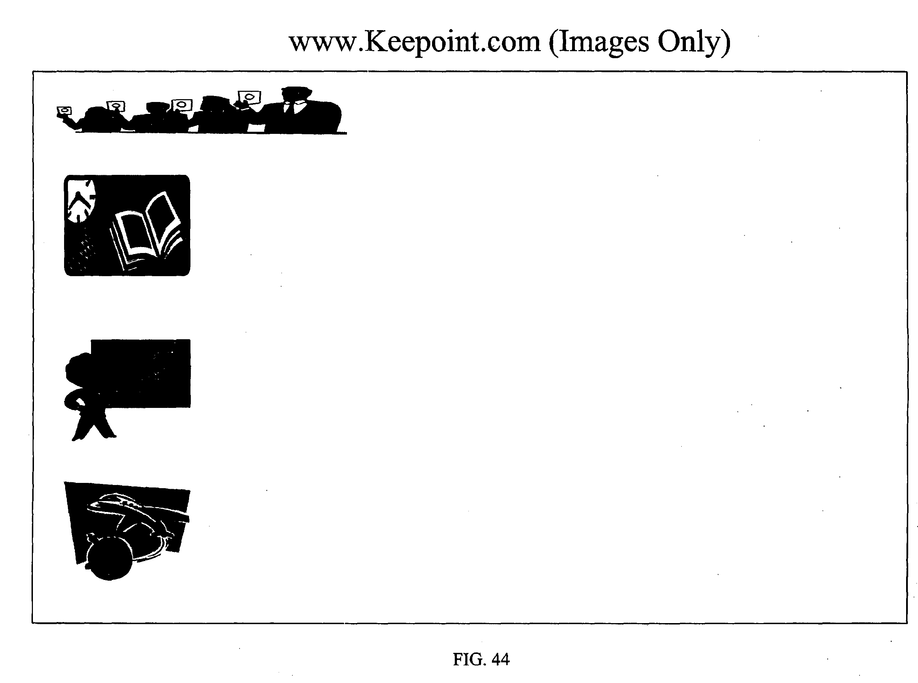

Fig. 44 shows an exemplary result of Advanced Save with Images Only save option. The page reflects the ImagesOnly SaveOption as only the images and no text has been saved throughout the page.

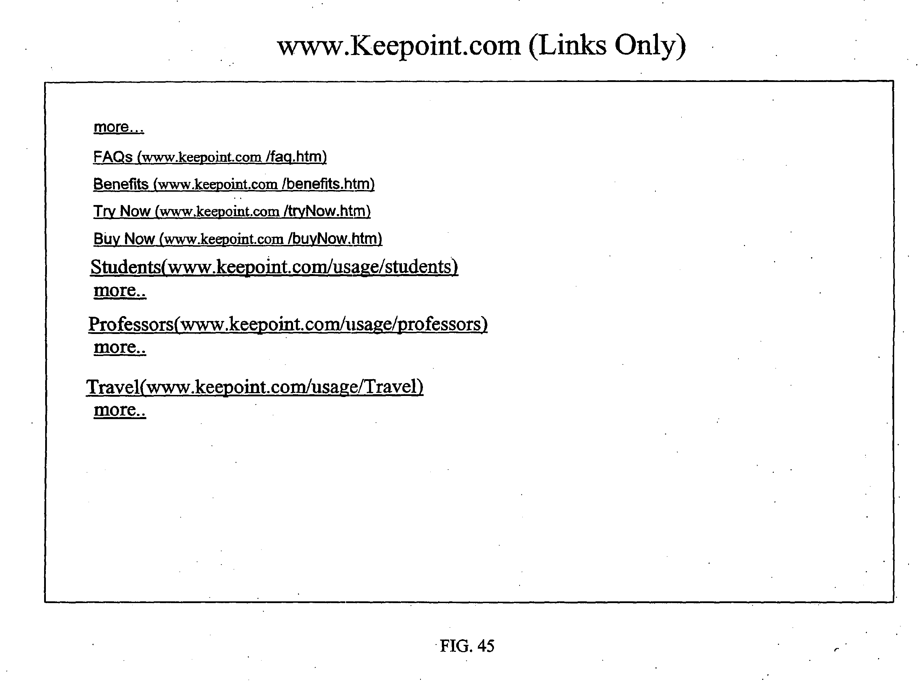

Fig. 45 shows an exemplary result of Advanced Save with Links Only save option. The page reflects the Links Only save option as nothing other than the links have been saved.

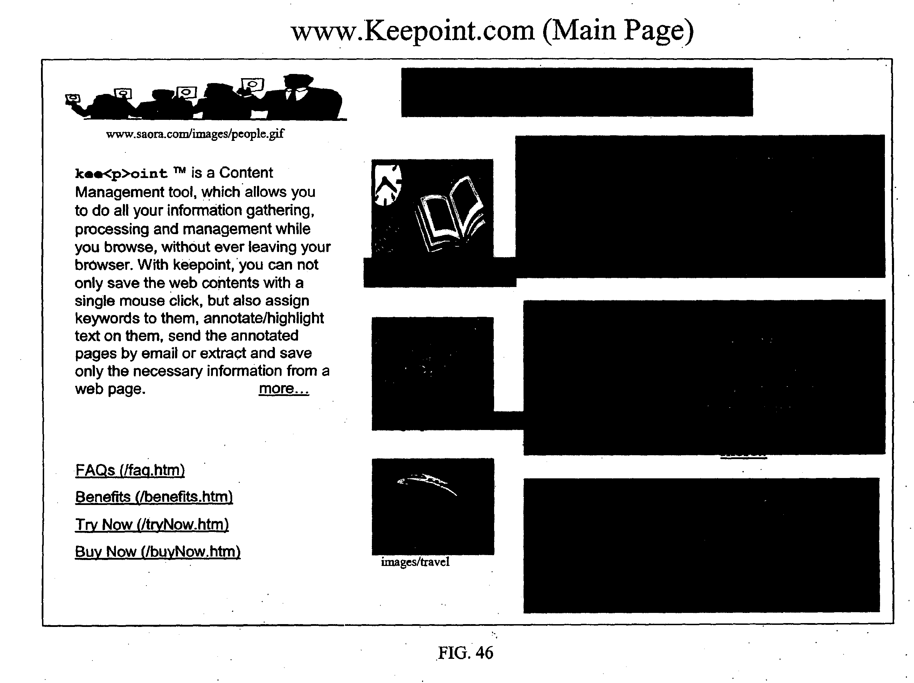

Fig. 46 shows an example of area selection. The figure gives an outlook of how a page looks when a particular area is selected.

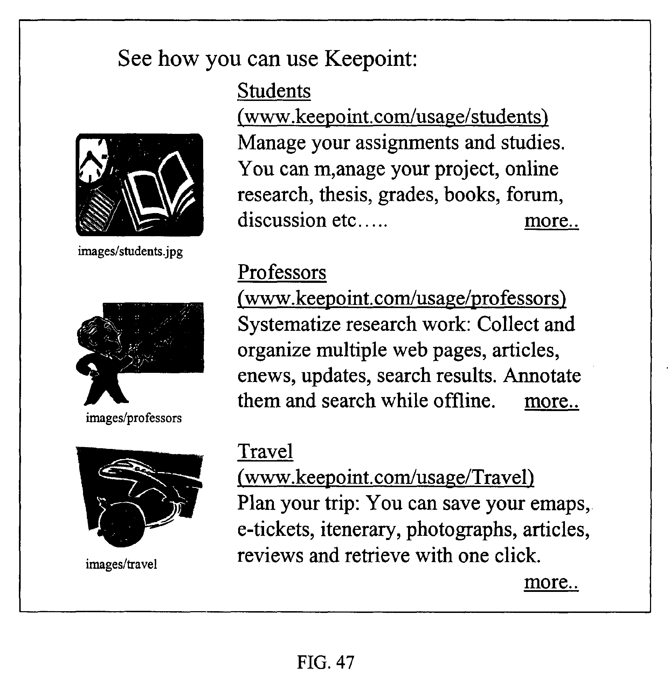

Fig. 47 shows an exemplary result of Quick Save for the selected area. The figure simply displays the area that was selected.

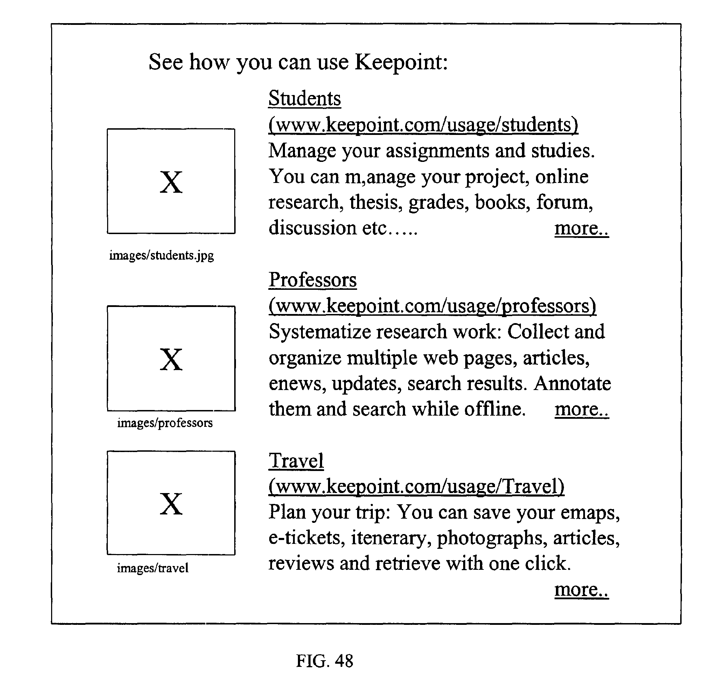

Fig. 48 shows an exemplary result of Advanced Save with Text Only save option for the selected area. The figure simply displays the area that was selected with only the texts and no images.

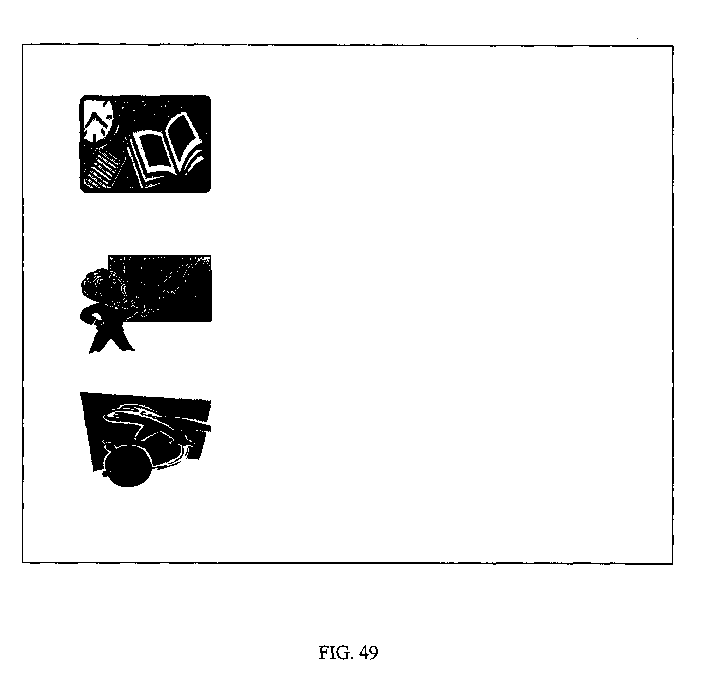

Fig. 49 shows an exemplary result of Advanced Save with Images Only save option for the selected area. The figure displays only the images that correspond to the selected area.

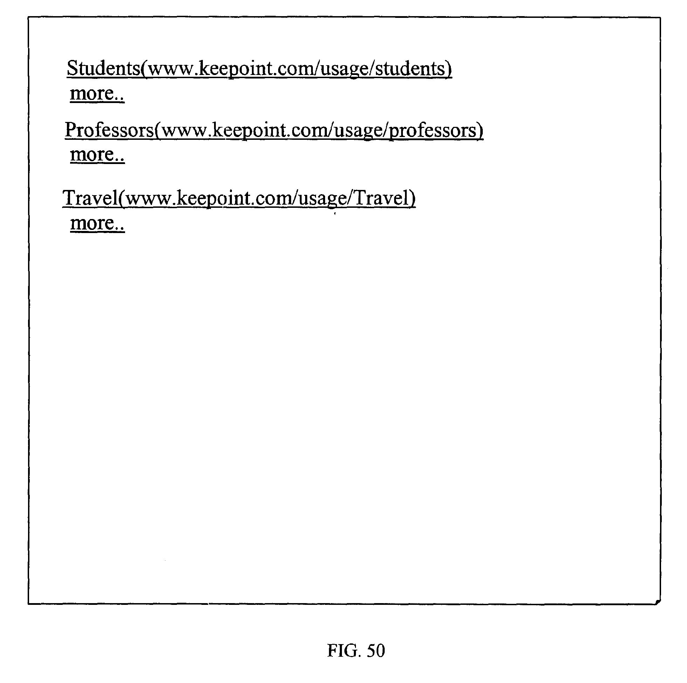

Fig. 50 shows an exemplary result of Advanced Save with Links Only save option for the selected area. The figure displays only the links that correspond to the selected area.

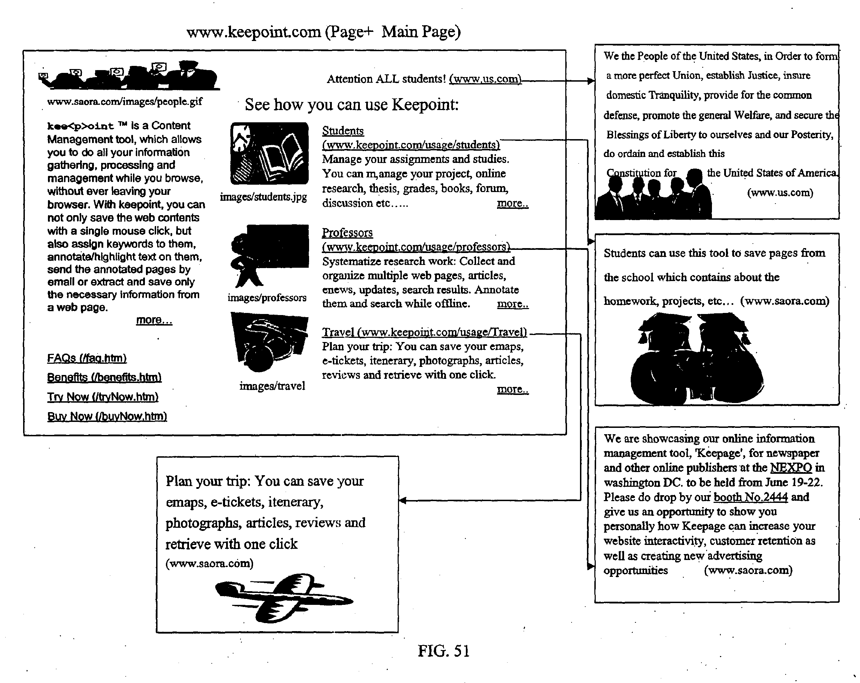

Fig. 51 shows an exemplary result of Quick Save with Page+ option. The figure displays the entire page saved including the images and the links along with the pages associated with links of the saved page.

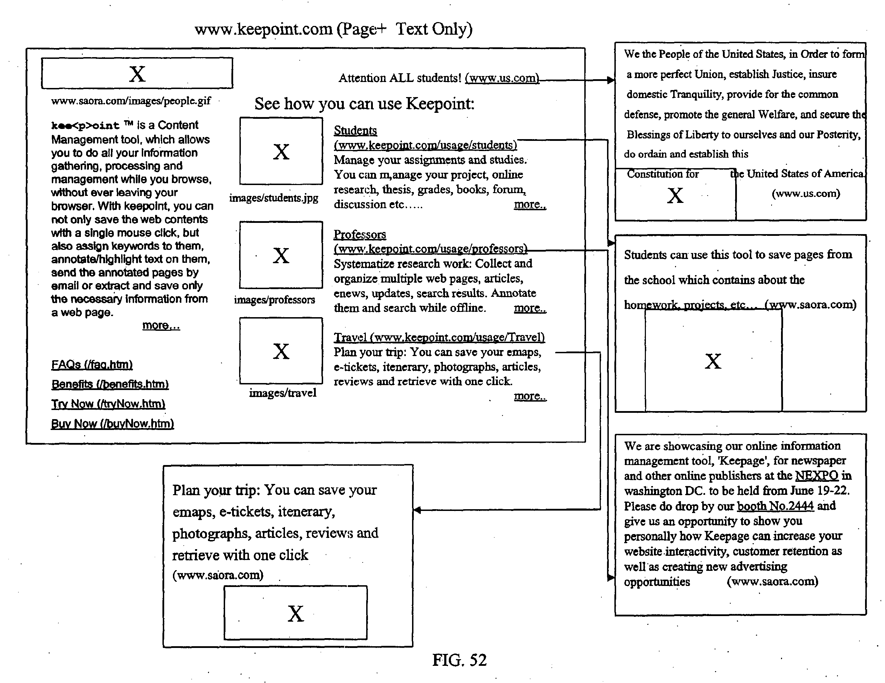

Fig. 52 shows an exemplary result of Advanced Save with Page+ Text Only save option. The figure displays only the text of the page saved along with the pages associated with the links of the saved page. Sub-pages shown also contain only the text and no images.

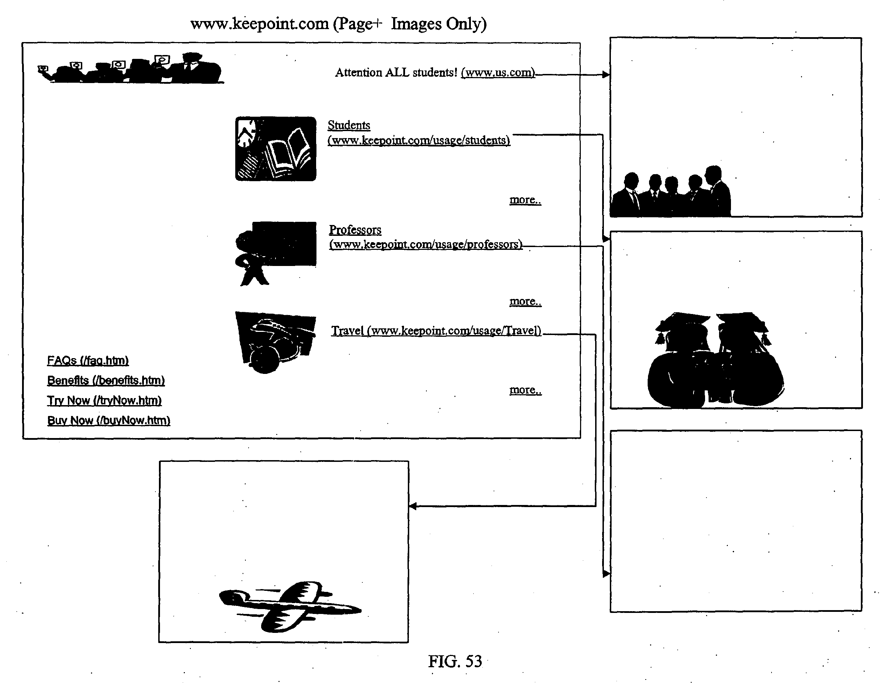

Fig. 53 shows an exemplary result of Advanced Save with Page+ Images Only save option. The figure displays only the images of the page saved along with the pages associated with the links of the saved page. Sub-pages shown also contain only the images and no text and links.

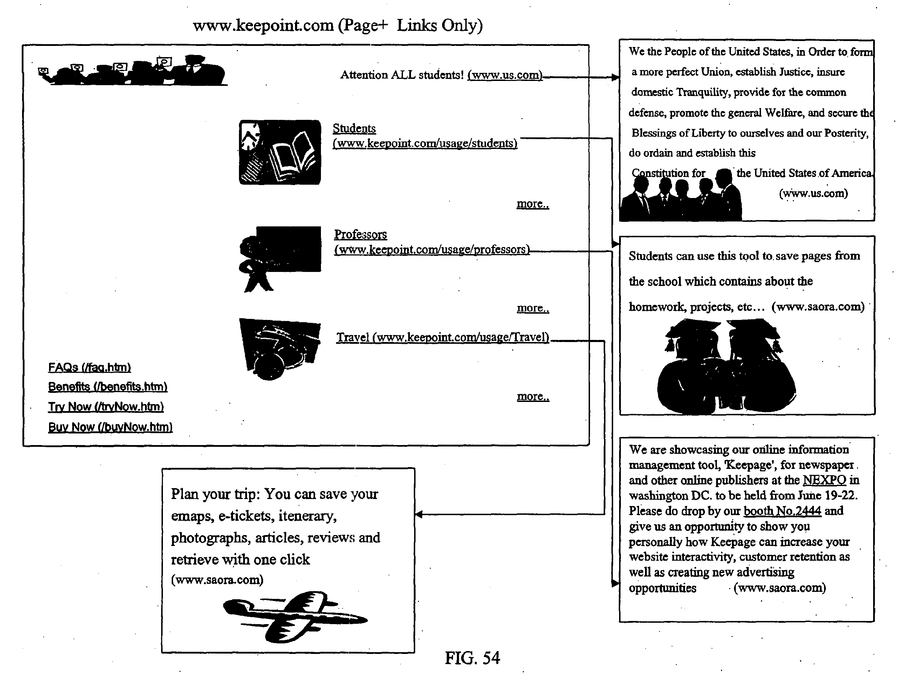

Fig. 54 shows exemplary results of Advanced Save with Page+ Links Only save option. The figure displays only the links of the page saved along with the pages associated with the links of the saved page.

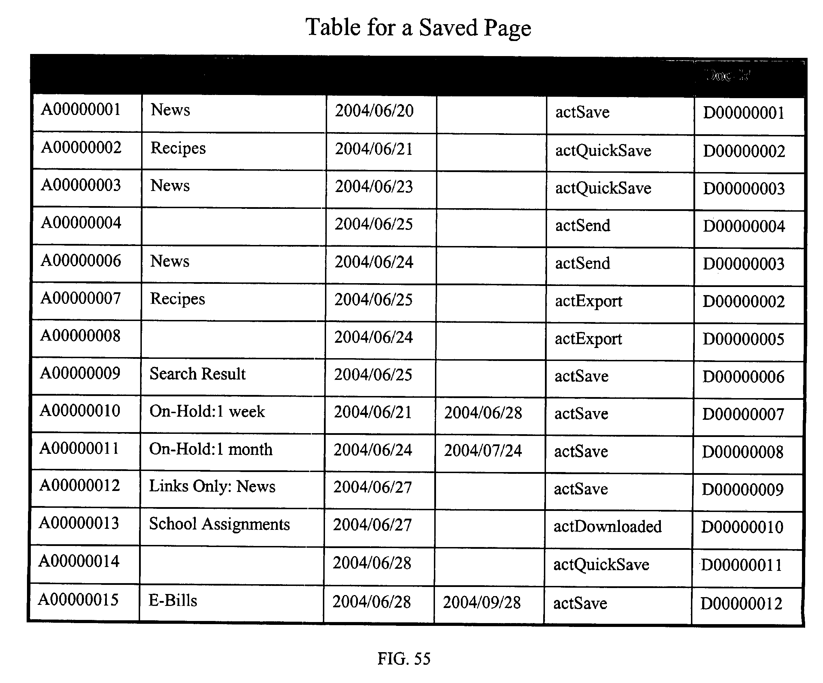

Fig. 55 shows an exemplary database table for an exemplary saved page. The table gives information regarding the KeepAs keywords, document Id,, action performed on those documents along with their date of implementation etc.

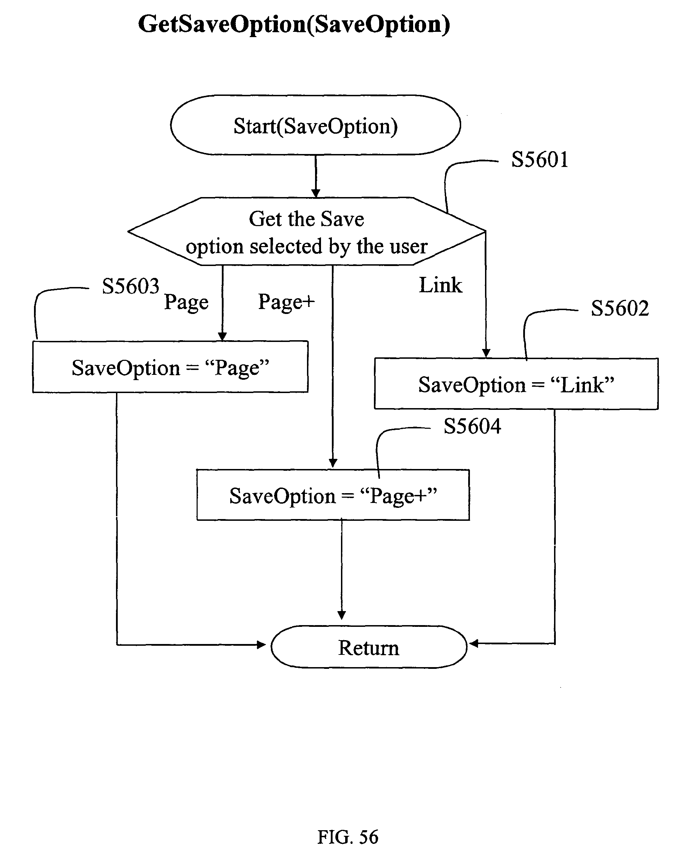

Fig. 56 is a flowchart of exemplary procedural steps for GetSaveOption. In step S5601, save option selected by the user is fetched. If it is Page, then SaveOption is set to Page in step S5603 and the process ends. If the save option is Page+, then in step S5604 SaveOption is set to Page+ and the process ends. If the save option selected is Link, then in step S5602 SaveOption is set to Link and the process ends.

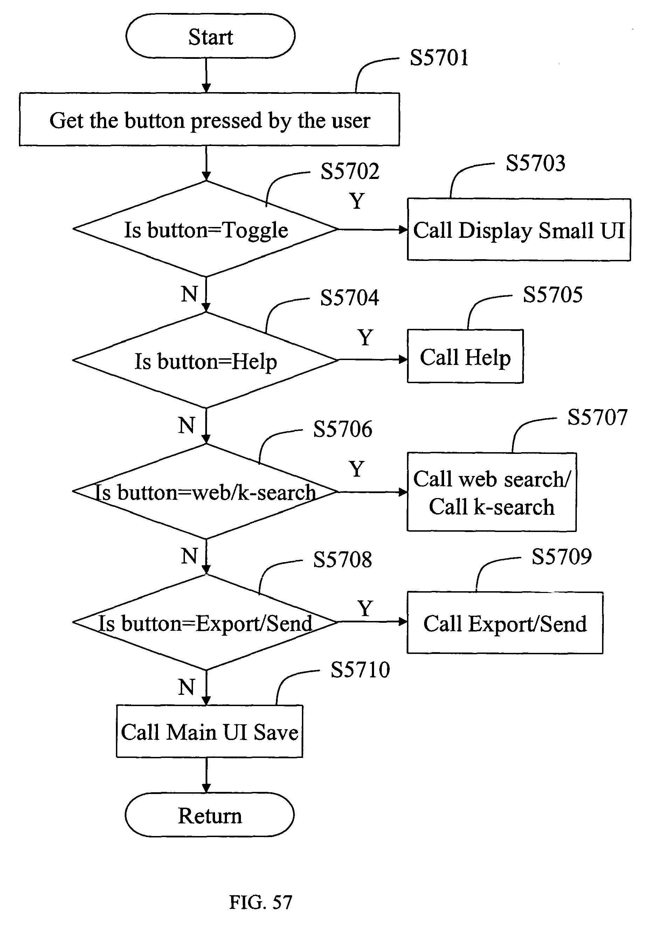

Fig. 57 is a flowchart describing exemplary actions performed when different keys are pressed by the user. In step S5701, a button is pressed by the user. In step S5702, a check is made to determine if the pressed button is Toggle or not. If it is Toggle, then in step S5703 Display Small UI function is called ; otherwise, in step S5704, a check is made to determine if the pressed button is Help or not. If it is Help, then in step S5705 Help function is called; otherwise, in step S5706, a check is made to determine if the pressed button is web/k-search or not. If it is web/k-search, then in step S5707 web search/k-search function is called; otherwise, in step S5708, a check is made to determine if the pressed button is Export/Send or not. If it is Export/Send, then in step S5709 Export/Send function is called; otherwise, the Main UI Save function is called in step S5710 and the process ends.

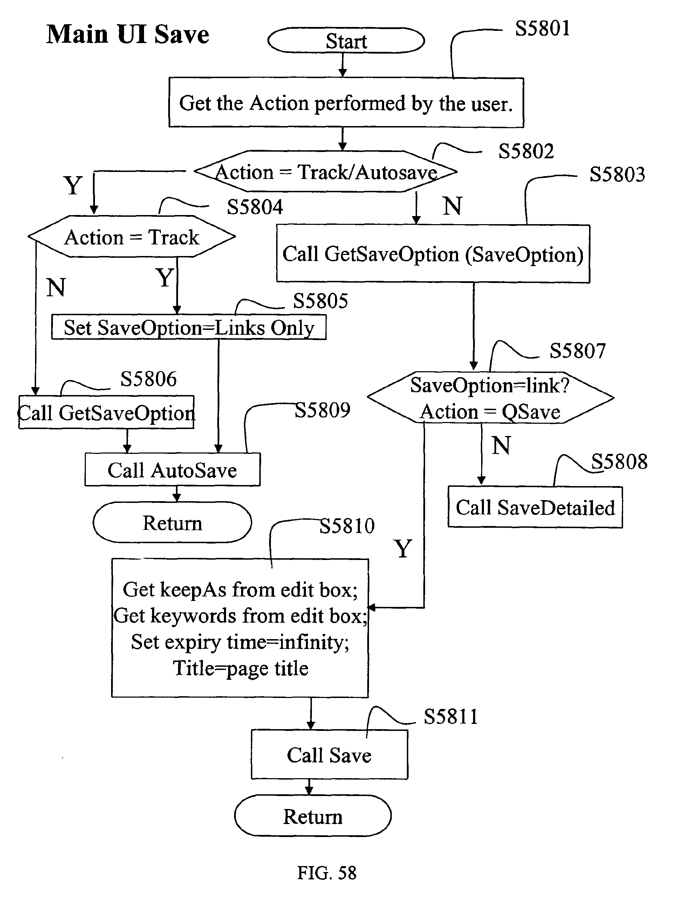

Fig. 58 is a flowchart of exemplary procedural steps for the Main UI Save. In step S5801, the action performed by the user is fetched. In step S5802, a check is made to determine if the action performed by the user is Track or Autosave. If yes, then in step S5804, a check is made to determine if the action is Track. If it is Track, then in step S5805 Save Option is set to Links Only. In step S5809, AutoSave is called and the process ends. If the Action is not Track, then in step S5806 GetSaveOption function is called and then the process goes to step S5809.

If the check in step S5802 determined that the Action was not Track or Autosave, then in step S5803 GetSaveOption function is called. In step S5807, a check is made to determine if the SaveOption is set to Link Only and the Action is QuickSave or not. If not, then SaveDetailed function is called in step S5808 and the process ends. If, however, the SaveOption and Action are set to the requisite values, then in step S5810 value of KeepAs is fetched from the edit box, keywords are fetched from the edit box, expiry time is set to infinity and title is set to page title. In step S5811 Save function is called, and the process ends.

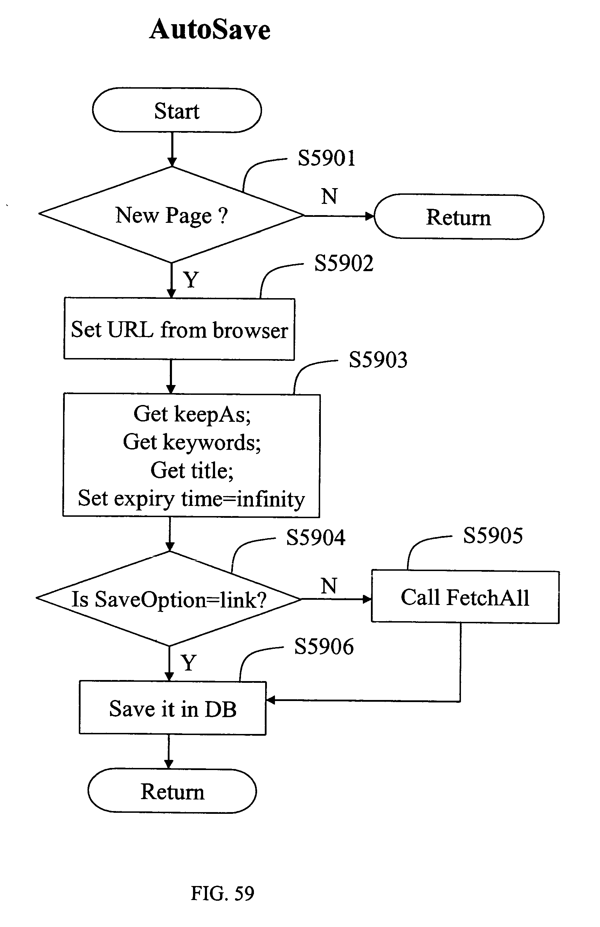

Fig. 59 is a flowchart of exemplary procedural steps for Auto Save. In step S5901, a check is made to determine if the page is new or not. If the page is not new, the process ends. However, if the page is new, then URL is set from the browser in step S5902. The values of KeepAs, keywords and title are fetched and the expiry time is set to infinity in step S5903. Now in step S5904, a check is made to determine whether the save option is link or not. If it is link, then the link is saved in the DB in step S5906; otherwise, FetchAll function is called in step S5905 and then the link is saved in the DB in step S5906 and the process ends.

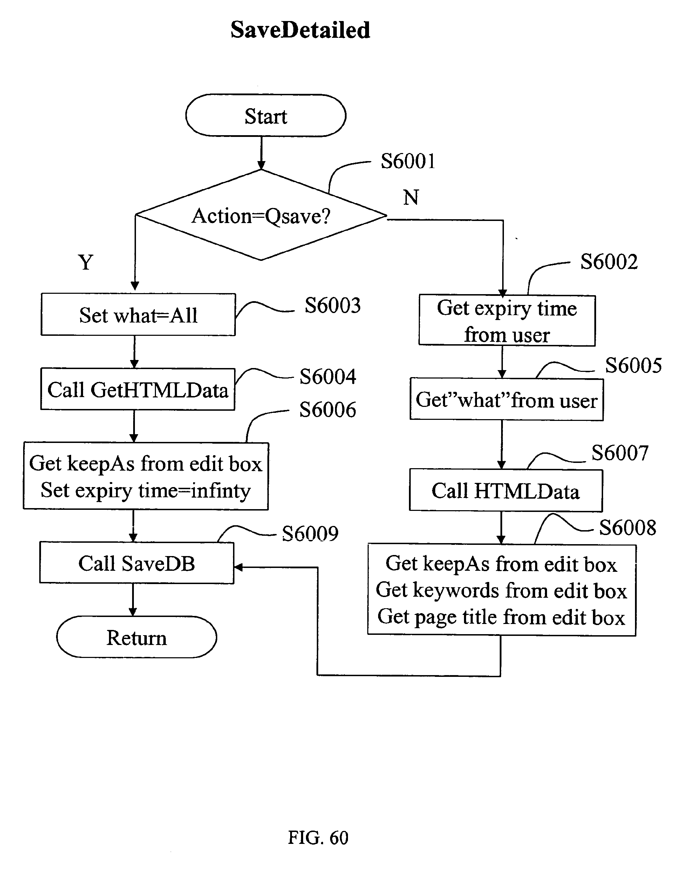

Fig. 60 is a flowchart of exemplary procedural steps for Detailed Save. In step S6001, a check is made to determine if the action is QSave or not. If it is QSave, then in step S6003, What is set to All. In step S6004, GetHTMLData is called. In step S6006, KeepAs is fetched from edit box and expiry time is set to infinity. In step S6009, SaveDB is called and the process ends.

If the action is not QSave, then in step S6002, expiry time is obtained from the user. In step S6005, the value of What is obtained from the user and then in step S6007 the HTMLData is called. In step S6008, KeepAs, keywords and page title are fetched from the edit box. It is followed by step S6009 and the process ends.

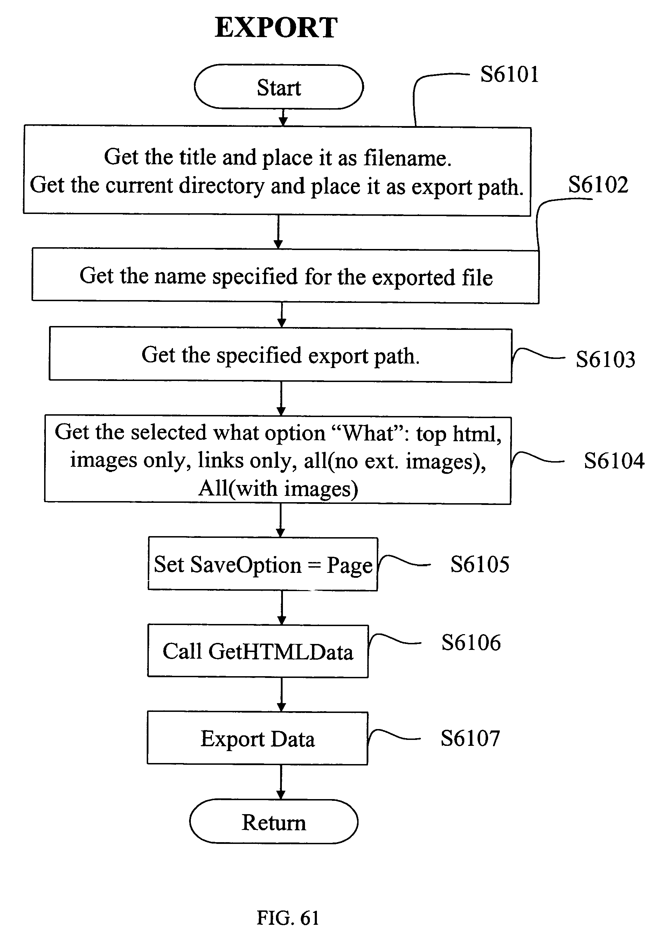

Fig. 61 is a flowchart of exemplary procedural steps for Export. In step S6101, the title is fetched and placed as filename, the current directory is fetched and placed as export path. in step S6102, the name specified for the exported file is fetched. In step S6103, the specified export path is fetched. In step S6104, the selected What option, viz. top HTML, Images Only, Links Only, All (no ext. images), All (with images) is fetched. In step S6105, SaveOption is set to Page and the GetHTMLData is called in step S6106. In step S6107, the data is exported and the process ends.

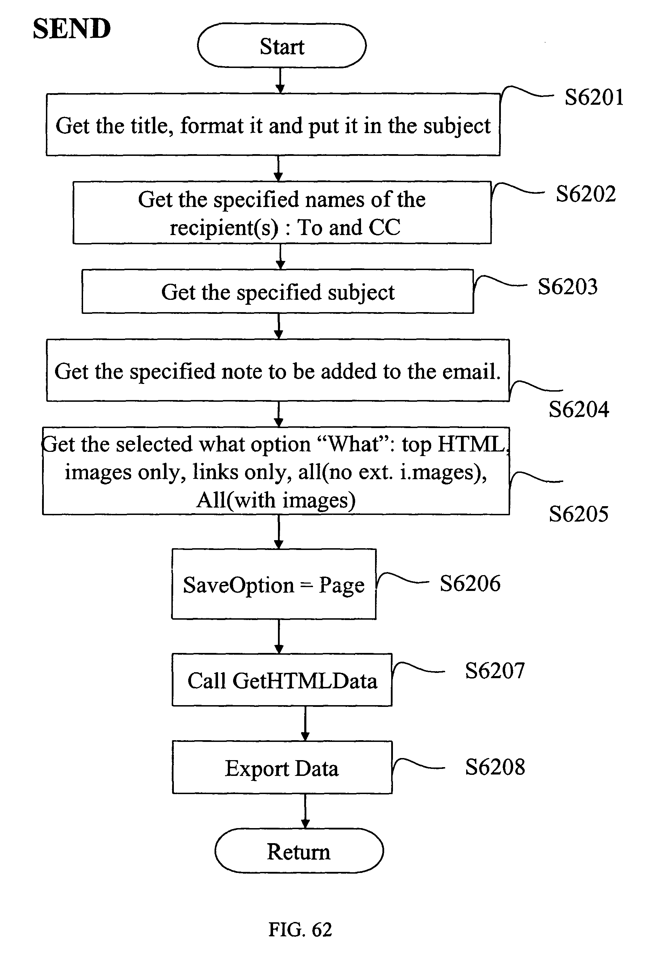

Fig. 62 is a flowchart of exemplary procedural steps for Send. In step S6201, the title is fetched, formatted and put in the subject. In step S6202, the specified names of the email recipients (To and CC) are fetched. In step S6203, the specified subject is fetched. The specified note to be added to the email is fetched in step S6204. In step S6205, the selected What option, viz. Top HTML, Images Only, Links Only, All (no ext. images), All (with images) is fetched. In step S6206, the SaveOption is set to Page. In step S6207, GetHTMLData is called. In step S6207, data is exported and process ends.

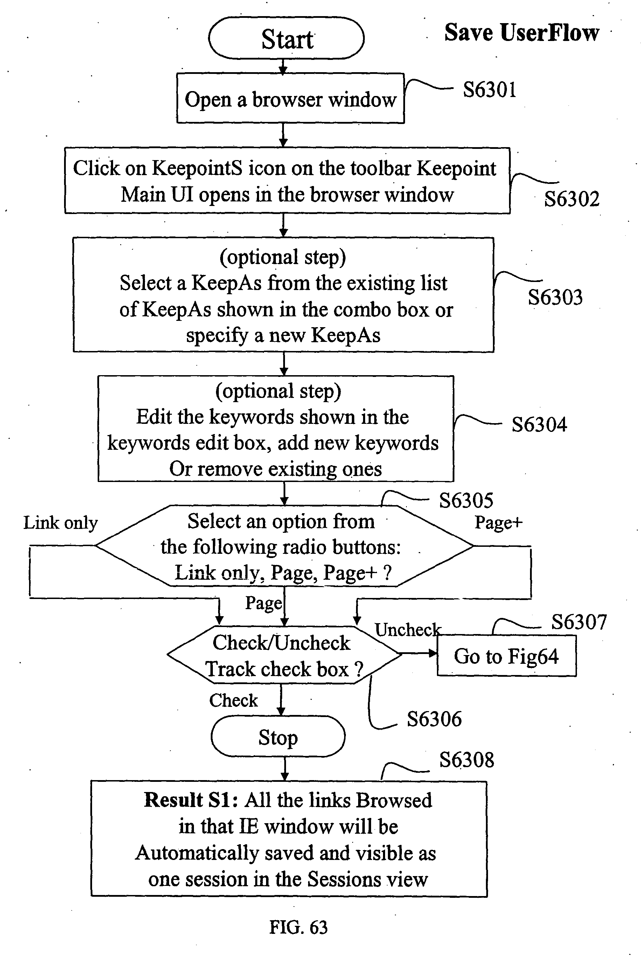

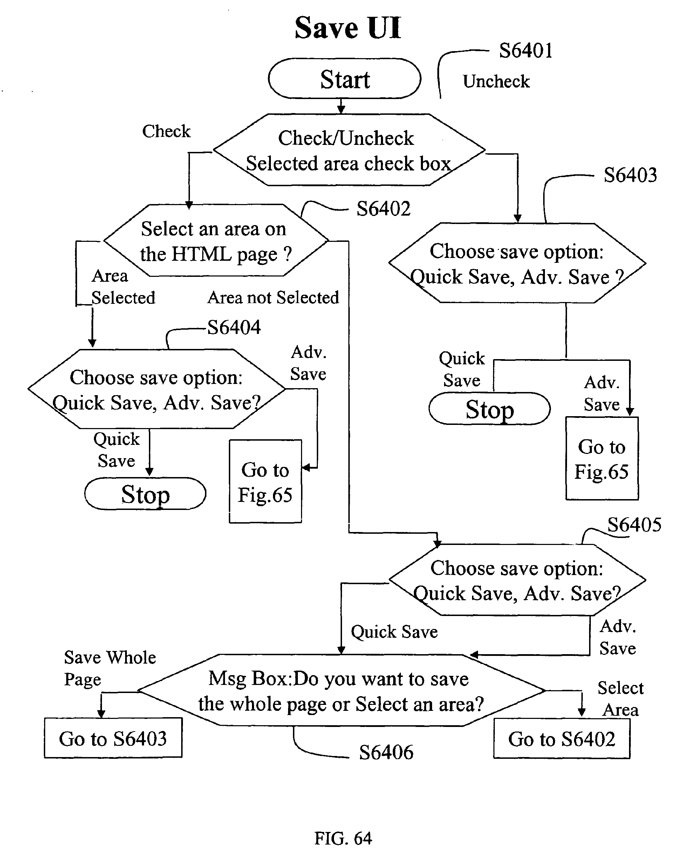

Fig. 63 is a flowchart of exemplary procedural steps for Save UserFlow. In step S6301, the user opens a browser window. In step S6302, user clicks on the keepointS icon on the toolbar to open the system Main UI in the browser window. In step S6303, as an optional step, the user selects a KeepAs from the existing list of KeepAs shown in combo box or specifies a new KeepAs. In step S6304, the user edits the keywords shown in the keywords edit box, adds new keywords or removes the existing ones. This step is also optional for the user. In step S6305, a check is made to determine if the user has selected an option from the radio buttons Link Only, Page or Page+. Then, in step S6306, a check is made to determine if the Track Check Box is checked or unchecked. If it is unchecked, the process takes the flow described in Fig. 64, as depicted in step S6307. If the box is checked, then the process ends. The result of this process is that all the links browsed in that Internet Explorer window will be automatically saved and visible as one session in the sessions view (step S6308).

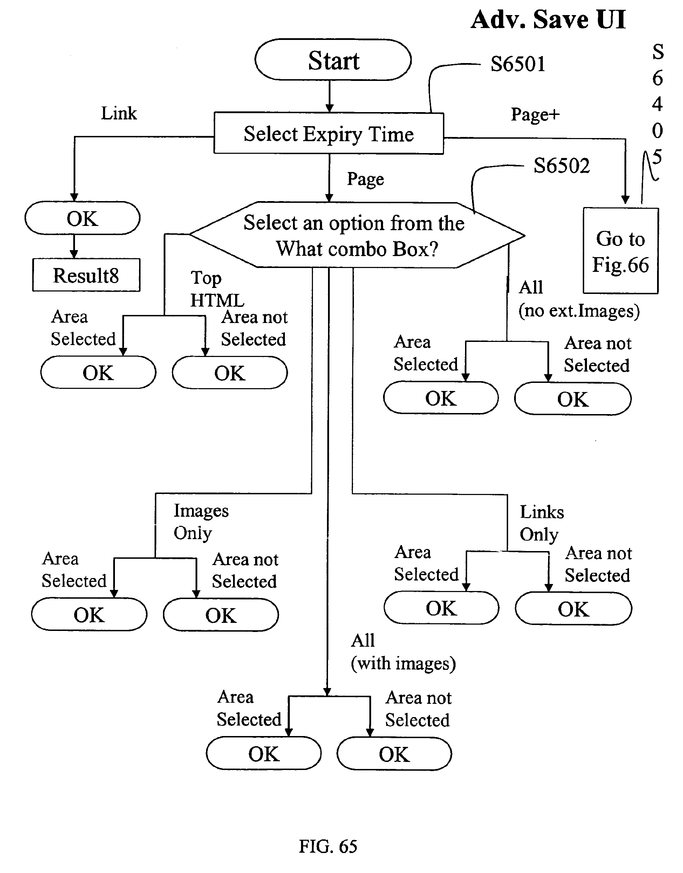

Fig. 64 is a flowchart of exemplary procedural steps for Save UI. In step S6401, the user checks or unchecks the selected area check box. If it is checked, then if the user selects an area on the html page in step S6402, then he chooses either Quick Save or Advanced Save as the save option in step S6404. If Advanced Save is chosen, then the further procedure follows as in Fig. 65. However if Quick Save option is selected, then save operation is performed according to the Link, or Page or Page+ options specified by the user.

If, however, the user does not select an area on the html page in step S6402, and he chooses the save option in step S6405 (Quick Save or Advanced Save), then a message is displayed on the message box, as in step S6406 asking the user if he wants to save the whole page or select an area. If the user decides to save the whole page, then the procedure from step S6403 is followed. However, if he decides to select an area, then the procedure from step 6402 is followed.

If the user unchecks the selected area check box, in the next step, step S6403, he chooses either Quick Save or Advanced Save as the save option. If Advanced Save is chosen, then the further procedure follows as in Fig. 65. However if Quick Save option is selected, then save operation is performed according to the Link, or Page or Page+ options specified by the user.

Fig. 65 is a flowchart of exemplary procedural steps for Advanced Save UI. In step S6501, expiry time is selected. If the SaveOption is LinkOnly, then the result is as shown in Fig. 45.

If Save option selected is Page, then in step S6502 user selects an option from the What combo box. If Top HTML is selected, then result is as shown in Fig. 48 if area has been selected, and as shown in Fig. 43 if area has not been selected. If All (no ext images) option is selected from the What combo box, then if area has been selected, the contents of the selected area are saved excluding any external image within the selected area. However, if area has not been selected, then the contents of the whole page are saved excluding any external image. If Images Only option is selected from the What combo box, then the result is as shown in Fig. 44 if area has been selected, and as shown in Fig. 49 if area has not been selected. If Links Only option is selected from the What combo box, then result is as shown in Fig. 50 if the area has been selected, and as shown in Fig. 45 if area has not been selected. If All (with images) option is selected from the What combo box, then the result is as shown in Fig. 47 if area has been selected, and as shown in Fig. 42 if the area has not been selected.

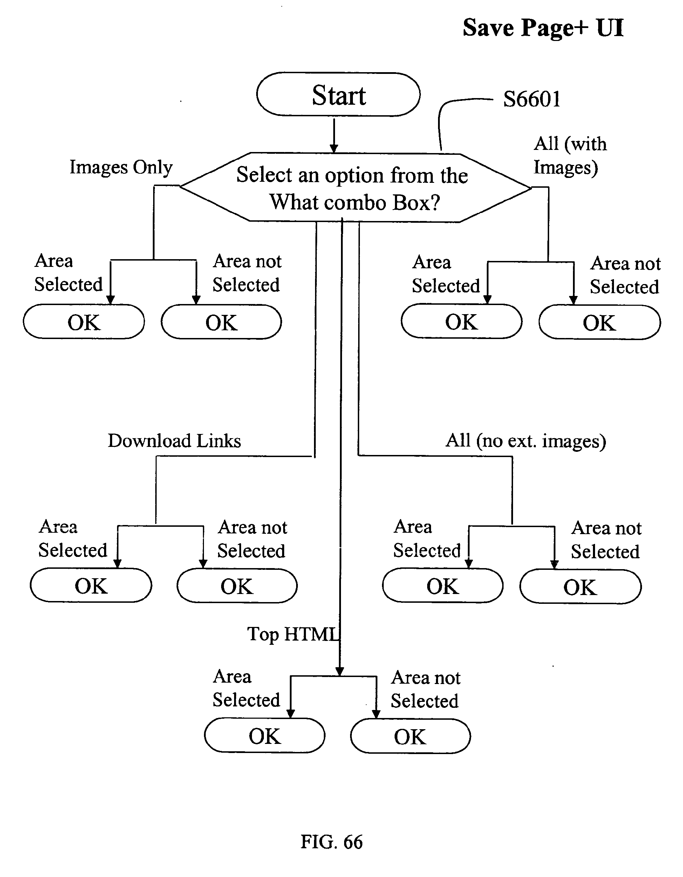

If the Save option selected is Page+, then the procedure follows as described in Fig. 66.

Fig. 66 is a flowchart of exemplary procedural steps for Save Page+ UI. In step S6601, the user selects an option from the What combo box.

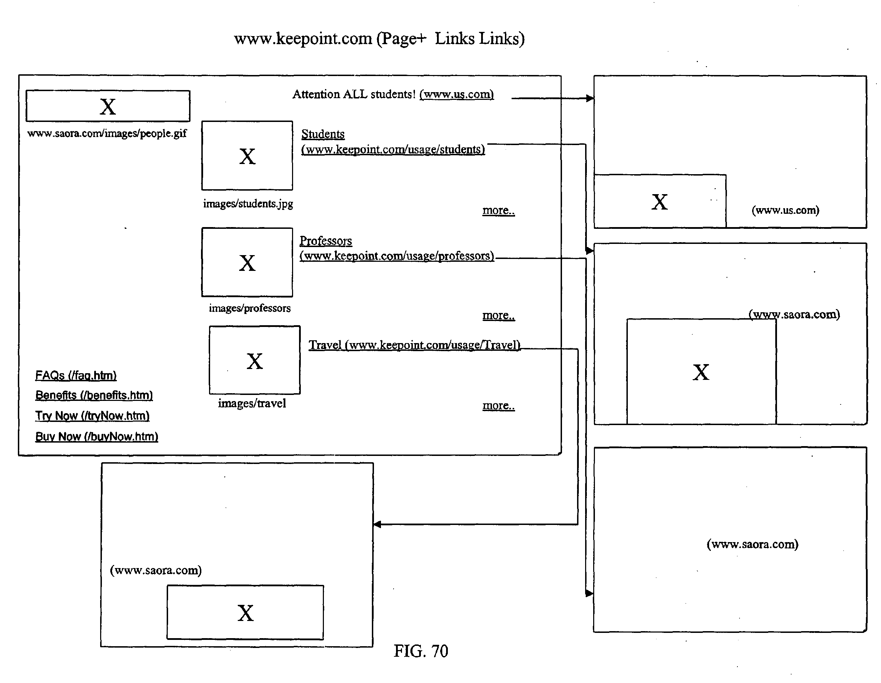

If the option selected from the What combo box is Images Only, then the result is as shown in Fig. 44 if area has been selected and as shown in Fig 49 if area has not been selected. If the option selected from the What combo box is Download Links, then the result is as shown in Fig. 70 if area has been selected and as shown in Fig 54 if area has not been selected. If Top HTML option is selected, then the result is as shown in Fig. 48 if area has been selected, and as shown in Fig. 43 if area has not been selected. If All (no ext images) option is selected from the What combo box, then, if area has been selected, the selected area in the HTML page excluding any external images is saved, while if area has not been selected, then the entire HTML page is saved excluding any external images. If the option selected from the What combo box is All (with images), then the result is as shown in Fig. 47 if area has been selected and as shown in Fig. 42 if area has not been selected.

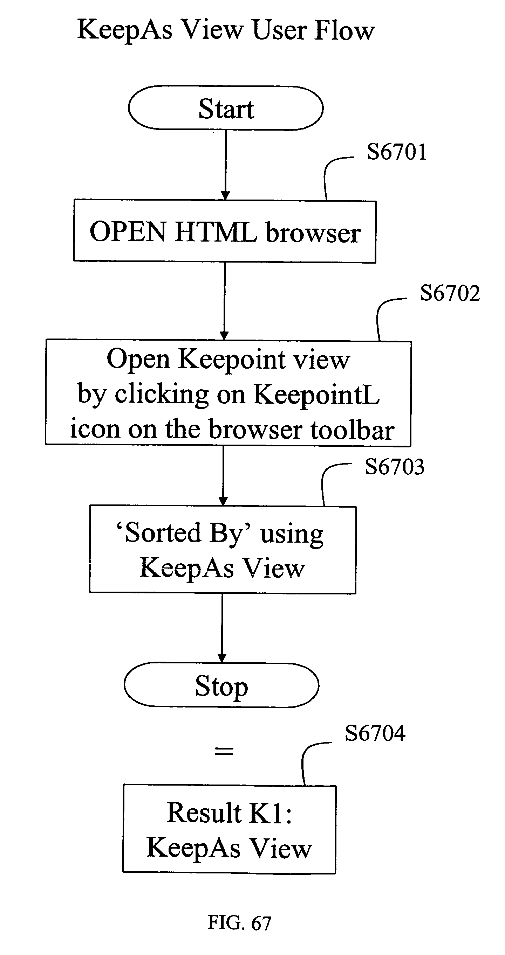

Fig. 67 is a flowchart of exemplary procedural steps for KeepAs view user flow. In step S6701, the user opens an HTML page. In step S6702, user opens the system view by clicking on the keepointL icon on the browser window. In step S6703, user clicks on 'Sorted By' icon to choose KeepAs view. As a result, KeepAs view is now available, as depicted in step S6704.

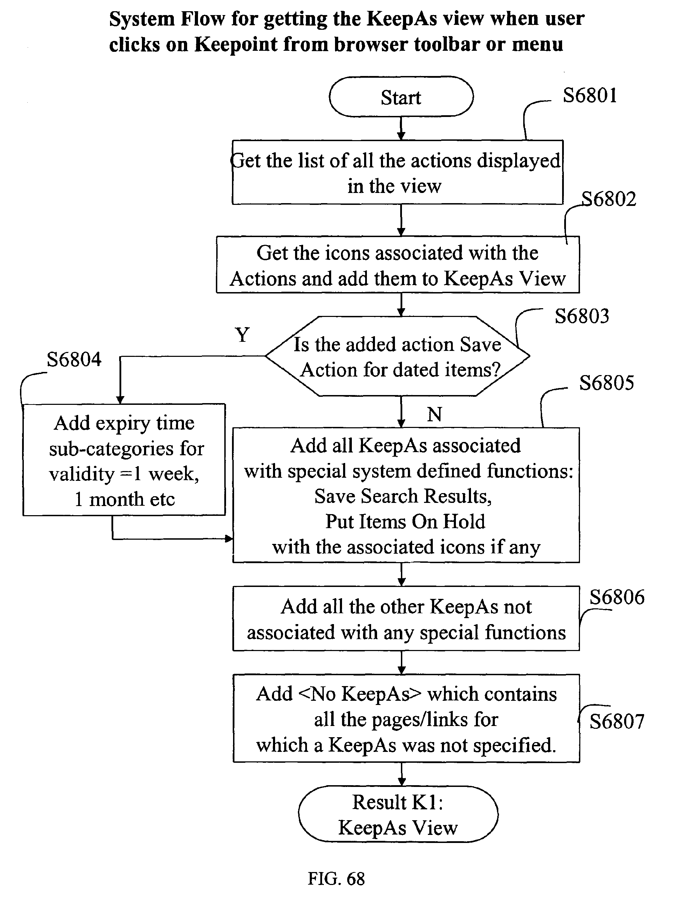

Fig. 68 is a flowchart of exemplary system flow procedural steps for getting the KeepAs view when user clicks on keepoint^{R} from browser toolbar or menu. In step S6801, the list of all the actions displayed in the view are fetched. In step S6802, the icons associated with the actions are fetched and added to the KeepAs view. In step S6803, a check is made to determine if the added action is Save action for the dated items. If not, then in step S6805 all the KeepAs associated with special system defined functions, viz. Save Search Results, Put Items On Hold are added with the associated icons if any. In step S6806, all the other KeepAs not associated with any special functions are added. In step S6807, a <No KeepAs > is specified for pages or links for which a KeepAs was not specified and the process ends. If, however, the check in step S6803 determined that the added action was not Save action for dated items, then in step S6804 expiry time is added and sub-categories for validity such as 1 week, 1 month etc. are added and the process follows the procedure from step S6805.

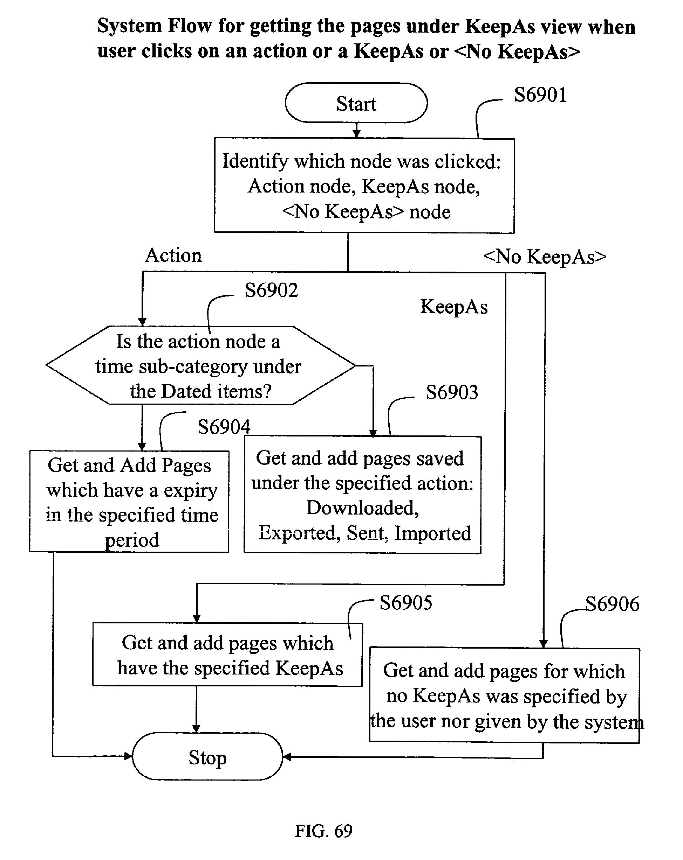

Fig. 69 is a flowchart of exemplary system flow procedural steps for getting the pages under KeepAs view when user clicks on an action or a KeepAs or <No KeepAs>. In step S6901, the node clicked by the user is identified as Action node, KeepAs node or <No KeepAs node>. If the node clicked is Action node, then in step S6902, a check is made to determine if the action node is a time sub-category under the dated items. If yes, then in step S6904, pages which have expiry in the specified time period are fetched and added and the process ends. If, however, the check in step S6902 determined that action node is not a time sub-category under dated items, then in step S6903, pages are fetched and added under the specified action viz. Downloaded, Exported, Sent and Imported. In step S6905, pages having specified KeepAs are fetched and added and the process ends. If the node clicked is <No KeepAs>, then in step S6906 the pages for which no KeepAs was specified by either the user or the system are fetched and added and the process ends.

Fig. 70 shows an exemplary result of Advanced Save with Page+ Links SaveOption. The figure displays only the links of the page saved along with the links on the pages associated with the links of the saved page.

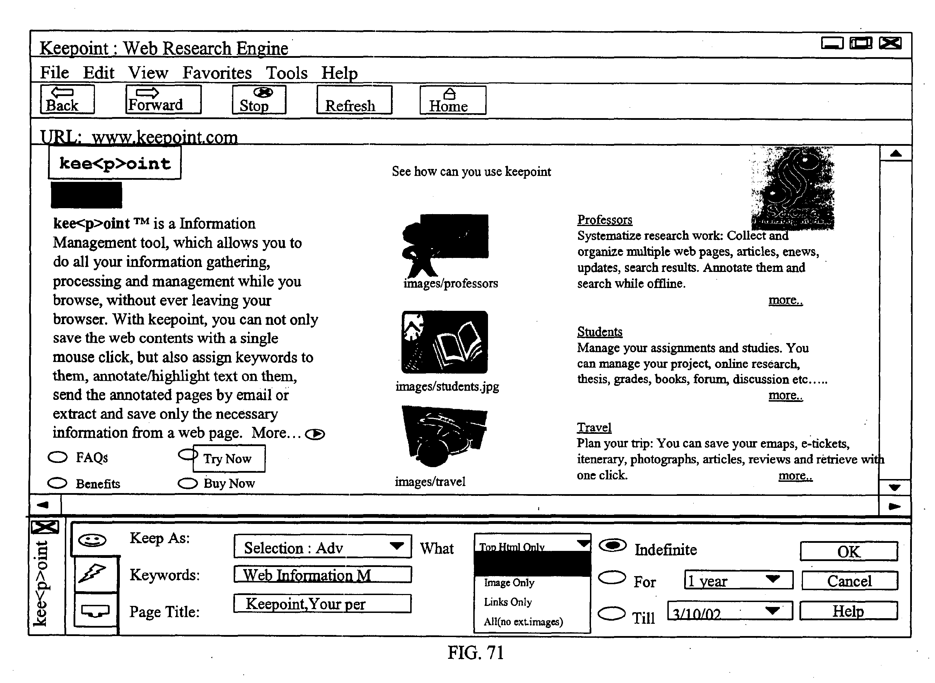

Fig. 71 is an example of Advanced save UI without area selection.

Here the actions performed by the Advanced Save option are in reference to the whole page. The entire page will be saved in such a case with the necessary specifications.

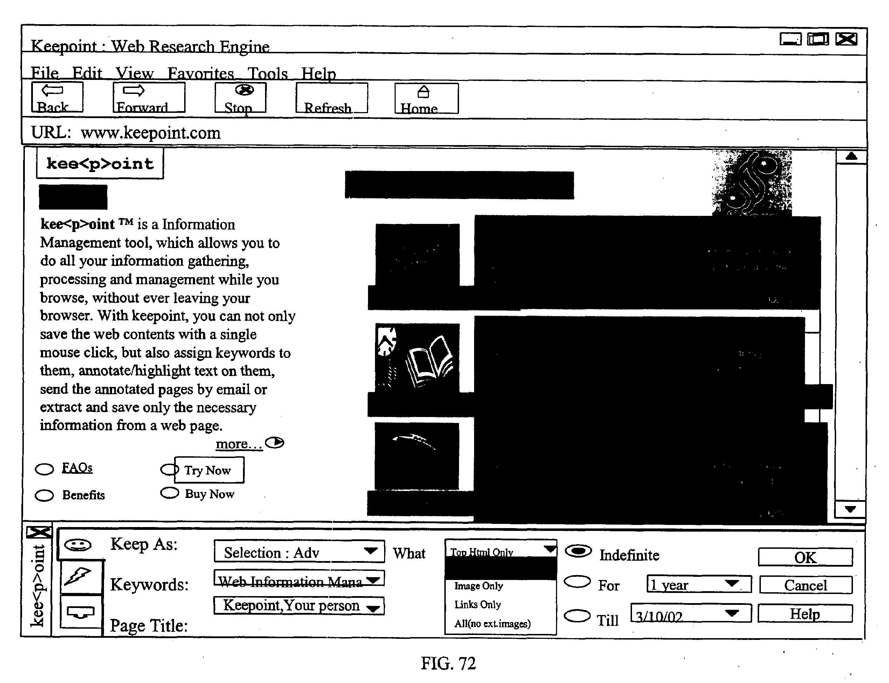

Fig. 72 is an example of Advanced save UI with area selection. Here the actions performed by the Advanced SaveOption are in reference to the selected area. Only the selected area will be saved in such a case with the necessary specifications.

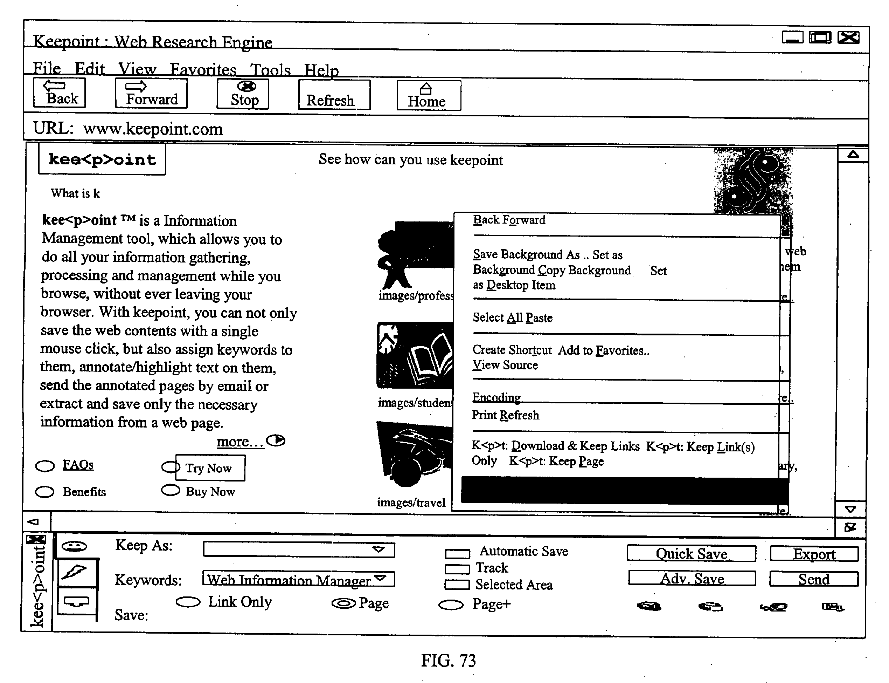

Fig. 73 shows an example content of Right Click option anywhere on the page. Here the actions performed by the options of the Right Click are in reference to the entire page. The entire page will undergo a change in such a case.

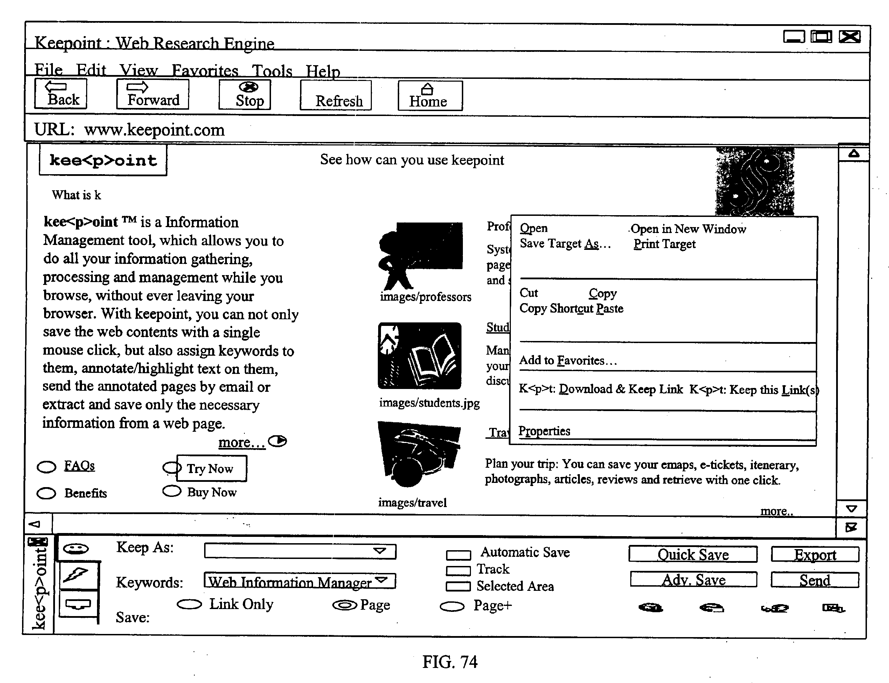

Fig. 74 shows an example content of Right Click option on the links only. Here the actions performed by the options of the Right Click are in reference to the links which are clicked or selected. Only the links will undergo a change in such a case.

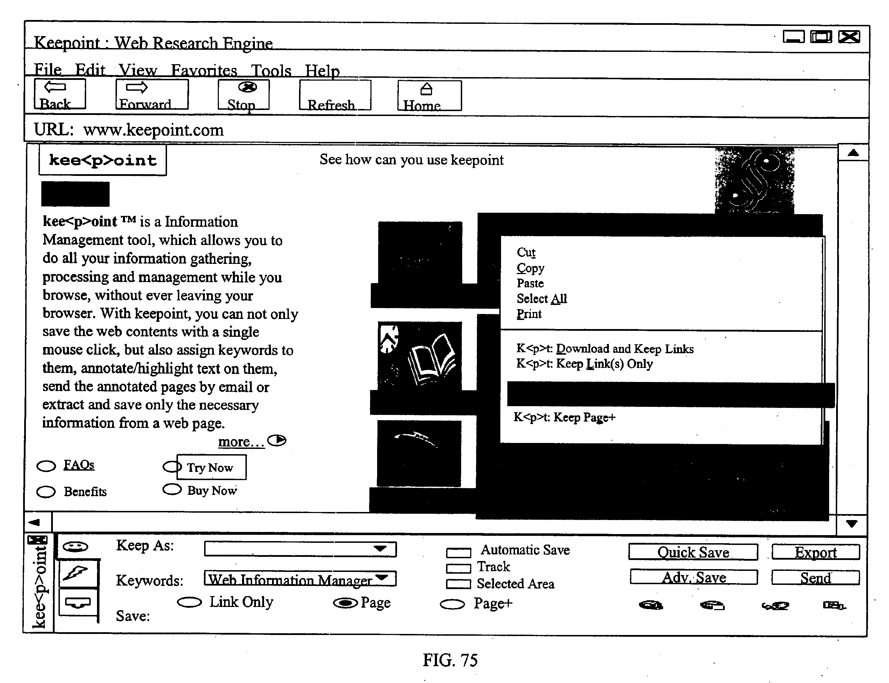

Fig. 75 shows an example content of Right Click option on the selected area. Here the actions performed by the options of the Right Click are in reference to the selected area. Only the selected portion will undergo a change in such a case.

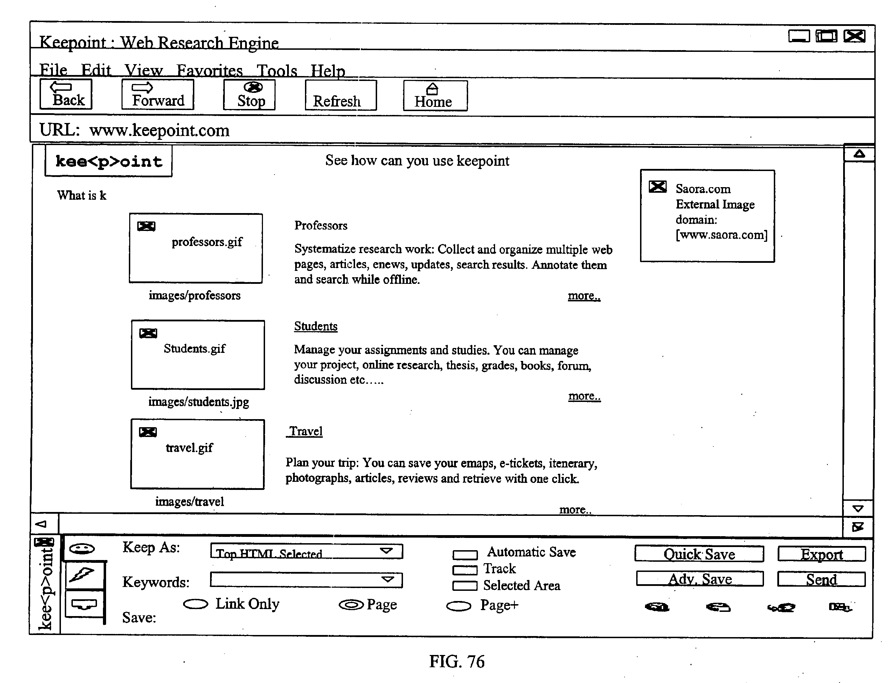

Fig. 76 is an example of Top HTML Save with area selection. It shows that with the Top HTML Advanced Save option, only the HTML text on the top page is saved excluding the images and links.

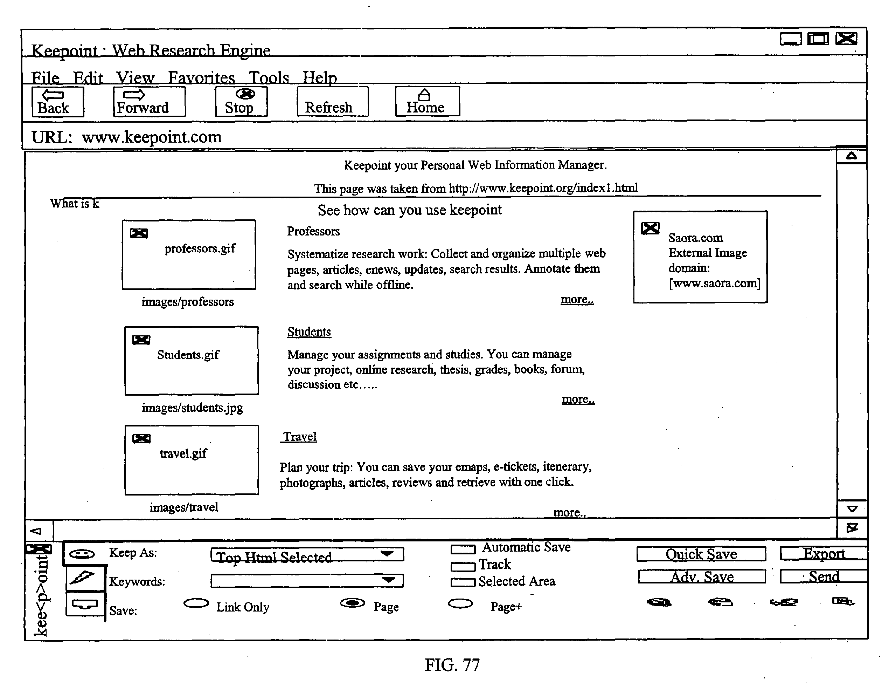

Fig. 77 is an example of Quick Save UI of Selected Area with layout. It shows that the selected area on the HTML page is saved within the layout.

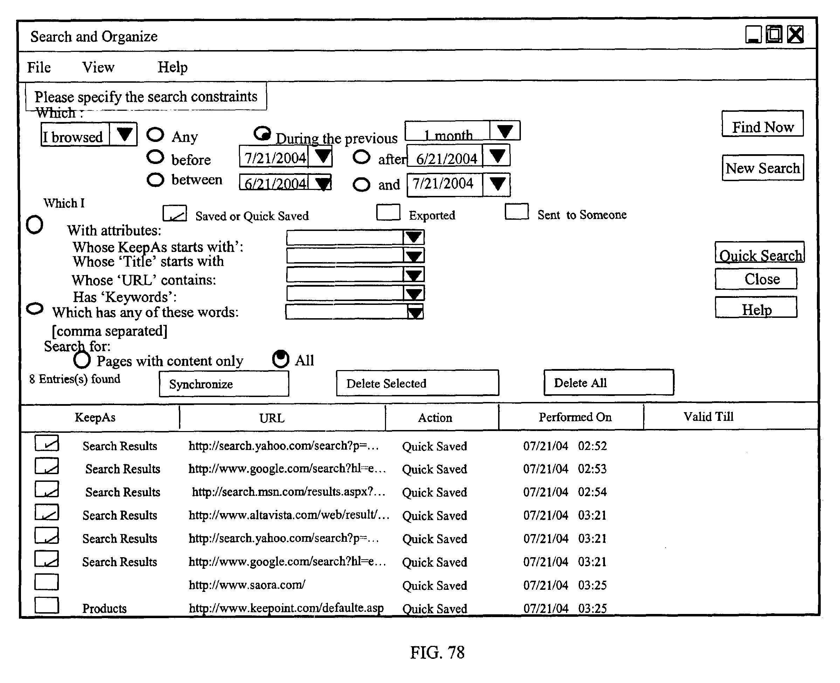

Fig. 78 is an example of Search and Organize UI. It shows the result of a search action with specified search constraints. These search results can be organized using the synchronize button.

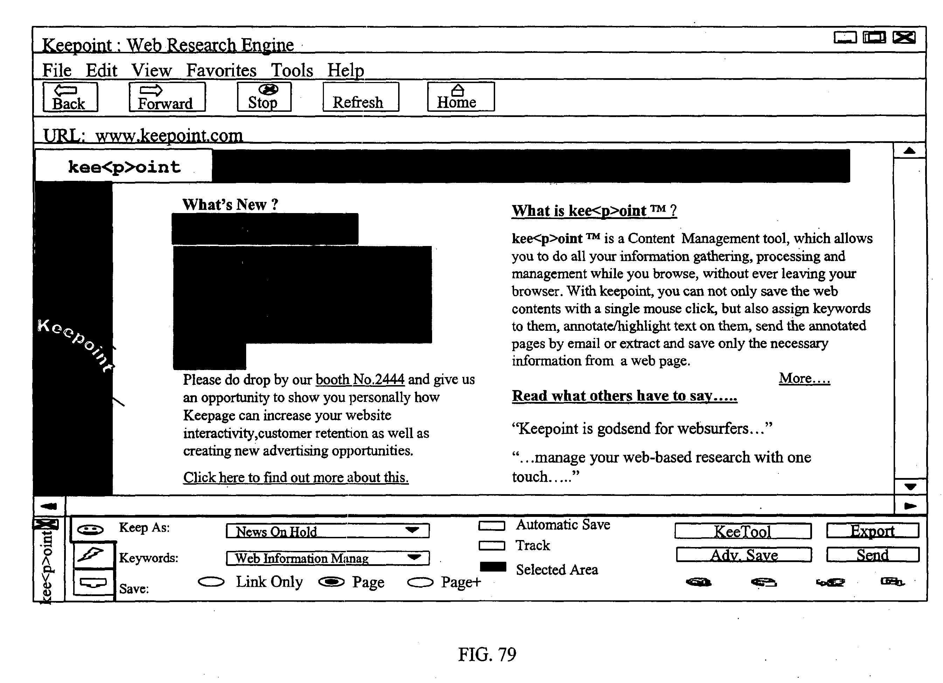

Fig. 79 is an example of assigning the value of KeepAs as one of the KeeTools. It shows that with News on Hold as KeepAs, the QuickSave button is replaced by KeeTool. This implies that News on Hold has been assigned as a KeeTool.

The present invention described above may be applied to a system constituted of a plurality of computers, or a specific computer within a system. The object of the present invention can also be achieved by supplying a storage medium storing program codes of software for implementing the function of the above embodiment to a system or an apparatus, and reading out and executing the program codes stored in the storage medium by a computer (or a CPU or MPU) of the system or apparatus. In this case, the program codes read out from the storage medium implement the function of the present invention, and the storage medium storing these program codes constitutes the invention. Also, besides the function of the above embodiment being implemented by executing the readout program codes by the computer, the present invention includes a case where an OS (Operating System) or the like running on the computer performs a part or the whole of actual processing in accordance with designations by the program codes and thereby implements the function of the above embodiment.

Furthermore, the present invention also includes a case where, after the program codes read out from the storage medium are written in a memory of a function extension board inserted into the computer or of a function extension unit connected to the computer, a CPU or the like of the function extension board or function extension unit performs a part or the whole of actual processing in accordance with designations by the program codes and thereby implements the function of the above embodiment.

It is to be understood that the above description is only representative of illustrative examples of embodiments and implementations. For the reader's convenience, the above description has focused on a representative sample of all possible embodiments, a sample that teaches the principles of the invention. Other embodiments may result from a different combination of portions of different embodiments. The description has not attempted to exhaustively enumerate all possible variations.

It should be recognized that the method, system and apparatus for monitoring connectivity across disparate networks has many applications, and is not limited to the representative examples disclosed herein. Alternate embodiments may not have been presented for some of the specific portions of the invention. Some alternate embodiments may result from a different combination of described portions, or other un-described alternate embodiments may be available for a portion. This is not to be considered a disclaimer of those alternate embodiments, because many of those un-described embodiments are within the literal scope of the following claims, and others are equivalent.

It is to be further understood that the tasks described in the following claims can be sequenced in many different orders to achieve the desired result. Thus, the scope of the present invention covers conventionally known variations and modifications to the system components and the method steps described herein, as would be known by those skilled in the art.

## Claims

1. A data processing method comprising the steps of:
acquiring data via an internet;
selecting an attribute of data to be processed;
extracting data of the selected attribute from an entire or a part of the acquired data; and
performing a predetermined process on the extracted data.

2. The method according to Claim 1, wherein in said selecting step, at least one of only text, only image, except for an exterior image, and only link can be selected as the attribute of data.

3. The method according to Claim 1 or 2, wherein in said acquiring step, data of a specified page and a page linked to the specified page are acquired.

4. The method according to Claim 3, wherein in said selecting step, attribute of data in the page linked to the specified can be selected as the attribute of data to be processed.

5. The method according to any of Claims 1 to 4, wherein the predetermined process is any of storage, send, export, or layout of data.

6. The method according to Claim 5, wherein the predetermined process is storage of data, and data of respective links are stored independently if the only link is selected as the attribute.

7. The method according to Claim 5, wherein the predetermined process is layout of data using a template, and. at least one of a design of the template, content or language of the template can be selected

8. The method according to any of Claims 1 to 7, further comprising the steps of:
displaying the acquired data; and
designating a desired area in the displayed data,
wherein in said extracting step, data of the selected attribute is extracted from the designated area.

9. A data processing apparatus comprising:
acquiring means of acquiring data via an internet;
selecting means of selecting an attribute of data to be processed;
extracting means of extracting data of the selected attribute from an entire or a part of the acquired data; and
processing means of performing a predetermined process on the extracted data.

10. A computer-executable program for controlling a computer to perform data processing, said program comprising codes for causing the computer to performing the steps of:
acquiring data via an internet;
selecting an attribute of data to be processed;
extracting data of the selected attribute from an entire or a part of the acquired data; and
performing a predetermined process on the extracted data.

11. A data processing method comprising the steps of:
displaying a web page acquired via an internet;
displaying a menu of processes for data related to a link in the displayed web page in response to clicking a right button of a mouse on the web page; and
performing a process selected by a user from the menu on the data related to the link.

12. The method according to Claim 11, wherein the data related to the link includes the link itself or data linked by the link.

13. The method according to Claim 12, further comprising the step of discriminating a position of mouse cursor when the right button of the mouse is clicked, and the menu to be displayed is determined in accordance with whether or not the position is on any link.

14. The method according to Claim 13, wherein in said step of displaying the menu, the menu of processes for data related to the link at the position of mouse cursor.

15. A data processing apparatus comprising:
means of displaying a web page acquired via an internet;
means of displaying a menu of processes for data related to a link in the displayed web page in response to clicking a right button of a mouse on the web page; and
means of performing a process selected by a user from the menu on the data related to the link.

16. A computer-executable program for controlling a computer to perform data processing, said program comprising codes for causing the computer to performing the steps of:
displaying a web page acquired via an internet;
displaying a menu of processes for data related to a link in the displayed web page in response to clicking a right button of a mouse on the web page; and
performing a process selected by a user from the menu on the data related to the link.

17. A data processing method comprising the steps of:
setting an index for data in advance of acquiring the data;
displaying an identifier for the setting;
acquiring data via an internet; and
assigning, in response to selecting the identifier, the index corresponding to the identifier to an entire or a part of the acquired data and performing a predetermined process thereon.

18. The method according to Claim 17, wherein in said setting step, a type of the process to be performed on the data is also set and the predetermined process is the set type of the process.

19. The method according to Claim 17, wherein in said setting step, a parameter related to the process is also set.

20. The method according to Claim 17, wherein the identifier is a button image of the index and the selection of the identifier is performed by touching the button image.

21. The method according to Claim 20, wherein in said setting step, the button image corresponding to the index is also set.

22. The method according to Claim 17, wherein a plurality of indices are set in said setting step and a plurality of identifiers corresponding to respective of the indices are displayed in said displaying step.

23. The method according to Claim 21, wherein a plurality of button images corresponding to respective of the indices are displayed within a number which can be displayed in said displaying step.

24. The method according to Claim 17, wherein the index includes at least one of a search result, a map, a news, e-mail, a bill, and my document.

25. The method according to any of Claims 17 to 24, wherein the predetermined process is a process for obtaining a keyword from a search engine and setting the keyword.

26. The method according to any of Claims 17 to 25, wherein the predetermined process includes at least one of data storage, link storage, send, export, and setting time limit for data storage.

27. The method according to any of Claims 17 to 26, further comprising the step of displaying a list of data sources as the identifiers with sorting by the indices.

28. The method according to Claim 27, wherein data corresponding to an identical index are further sorted by respective time limits for data storage.

29. The method according to any of Claims 17 to 28, further comprising the step of altering the displayed identifier to another identifier if an index which has been set is newly input.

30. A data processing apparatus comprising:
means of setting an index for data in advance of acquiring the data;
means of displaying an identifier for the setting;
means of acquiring data via an internet; and
means of assigning, in response to selecting the identifier, the index corresponding to the identifier to an entire or a part of the acquired data and performing a predetermined process thereon.

31. A computer-executable program for controlling a computer to perform data processing, said program comprising codes for causing the computer to performing the steps of:
setting an index for data in advance of acquiring the data;
displaying an identifier for the setting;
acquiring data via an internet; and
assigning, in response to selecting the identifier, the index corresponding to the identifier to an entire or a part of the acquired data and performing a predetermined process thereon.

32. A data processing method comprising the steps of:
displaying a menu for selecting a process for data and specifying a URL; and
obtaining data from the specified URL and displaying the obtained data.

33. The method according to Claim 32, further comprising the step of setting a URL in the menu based on designation by a user.

34. The method according to Claim 32, further comprising the step of setting a URL in the menu without designation by a user.

35. The method according to Claim 32, wherein the menu contains an image representing a button for selecting a URL.

36. The method according to any of Claims 32 to 35, wherein the image representing the button can be set by a user.

37. A data processing apparatus comprising:
means of displaying a menu for selecting a process for data and specifying a URL; and
means of obtaining data from the specified URL and displaying the obtained data.

38. A computer-executable program for controlling a computer to perform data processing, said program comprising codes for causing the computer to performing the steps of:
displaying a menu for selecting a process for data and specifying a URL; and
obtaining data from the specified URL and displaying the obtained data.

39. A data processing method comprising the steps of:
inputting a keyword;
selecting a search engine for an internet search; and
searching data by the selected search engine based on the input keyword.

40. The method according to Claim 39, further comprising the step of storing a search result with an index representing the search result.

41. The method according to Claim 40, further comprising the step of obtaining a keyword from the selected search engine, and the search result is stored in correspondence with the obtained keyword.

42. The method according to Claim 41, the search result is stored in correspondence with the input keyword if the keyword cannot be obtained from the selected search engine.

43. A data processing apparatus comprising:
means of inputting a keyword;
means of selecting a search engine for an internet search; and
means of searching data by the selected search engine based on the input keyword.

44. A computer-executable program for controlling a computer to perform data processing, said program comprising codes for causing the computer to performing the steps of:
inputting a keyword;
selecting a search engine for an internet search; and
searching data by the selected search engine based on the input keyword.

45. A data processing method comprising the steps of:
searching data;
specifying a common attribute for a search result; and
storing at least a part of the search result with the specified attribute.

46. The method according to Claim 45, wherein the common attribute includes at least one of an index, a keyword, and a time limit for storage.

47. The method according to Claim 45, wherein in said searching step, the search is performed on data with a predetermined attribute and a help file.

48. A data processing apparatus comprising:
means of searching data;
means of specifying a common attribute for a search result; and
means of storing at least a part of the search result with the specified attribute.

49. A computer-executable program for controlling a computer to perform data processing, said program comprising codes for causing the computer to performing the steps of:
searching data;
specifying a common attribute for a search result; and
storing at least a part of the search result with the specified attribute.

50. A data processing method comprising the steps of:
displaying at least one of a first menu for selecting an identifier name of a process and a second menu for a button image of a process; and
switching one of the first and second menu currently displayed with another one.

51. The method according to Claim 50, wherein processes with different attributes can be selected by a pull down menu in the first menu can be selected with respective button images in the second menu.

52. The method according to Claim 51, wherein processes corresponding to the button images can be defined by a user.

53. The method according to Claim 51 or 52, wherein a predefined button is displayed in an area and the button image defined by the user are displayed in the room of the area.

54. A data processing apparatus comprising:
means of displaying at least one of a first menu for selecting an identifier name of a process and a second menu for a button image of a process; and
means of switching one of the first and second menu currently displayed with another one.

55. A computer-executable program for controlling a computer to perform data processing, said program comprising codes for causing the computer to performing the steps of:
displaying at least one of a first menu for selecting an identifier name of a process and a second menu for a button image of a process; and
switching one of the first and second menu currently displayed with another one.
